# EUROPEAN PATENT SPECIFICATION

(11) **EP 2 741 148 B1**
(45) Date of publication and mention of the grant of the patent: **09.01.2019**
(21) Application number: 14158347.6
(22) Date of filing: 01.11.2007
(51) Int. Cl.: G03G 21/18, G03G 21/16

(54) **PROCESS CARTRIDGE AND IMAGE FORMING APPARATUS**
PROZESSKARTUSCHE UND BILDERZEUGUNGSVORRICHTUNG
CARTOUCHE DE TRAITEMENT ET APPAREIL DE FORMATION D'IMAGES

(30) Priority: 11.12.2006 JP 2006332837; 03.10.2007 JP 2007259660
(43) Date of publication of application: 11.06.2014
(62) Divisional of application: 07831405.1
(73) Proprietor: Canon Kabushiki Kaisha, Tokyo 146-8501 (JP)
(72) Inventor: CHADANI, Kazuo, Tokyo, Tokyo 146-8501 (JP); MORI, Tomonori, Tokyo, Tokyo 146-8501 (JP); HASHIMOTO, Koji, Tokyo, Tokyo 146-8501 (JP)
(74) Representative: TBK

(56) References cited:
- EP-A2- 2 054 776
- GB-A- 2 141 520
- US-A- 4 835 565
- US-A1- 2005 025 522
- US-A1- 2006 034 637
- US-B1- 6 285 847

## Description

The present invention relates to a process cartridge according to the preamble of claim 1, and an electrophotographic image forming apparatus which uses the same.

Here, the electrophotographic image forming apparatus forms an image on a recording material using an electrophotographic type process. The examples of the electrophotographic image forming apparatus include an electrophotographic copying machine, an electrophotographic printer (for example, laser beam printer, LED printer, and so on), a facsimile device, and a word processor.

The process cartridge is a cartridge which comprises at least developing means and an electrophotographic photosensitive drum in the cartridge integrally, and it is detachably mountable to the main assembly of the electrophotographic image forming apparatus.

The features of the preamble of claim 1 are disclosed in e.g. document US 2006/034637 A1.

Heretofore, the photosensitive drum and the process means actable on the photosensitive drum are intearallv unified into a cartridge in the electrophotographic image forming apparatus using the electrophotographic image forming process. The process cartridge type in which this cartridge is detachably mountable to the main assembly of the electrophotographic image forming apparatus, is employed. In this process cartridge type, the maintenance operation of the apparatus can be performed without depending on a service person, and therefore, the operativity can be remarkably and can be improved. Therefore, this process cartridge type is used widely in the electrophotographic image forming apparatus.

Light corresponding to the image information, such as the laser, LED, or the lamp, is projected onto the photosensitive drum in the electrophotographic image forming apparatus. By doing so, an electrostatic latent image is formed on the photosensitive drum. This electrostatic latent image is developed by a developing device. The developed image formed on the photosensitive drum is transferred onto a recording material. By doing so, the image is formed on the recording material.

JP 2001-255806A discloses the color electrophotographic image forming apparatus of the in-line type in which a plurality of process cartridges are put in order by the one array. The process cartridge 40 has a drum unit 41 which includes a photosensitive drum 44, and a developing unit 42 which includes a developing roller 68, and they are rotatably connected relative to each other by a pin 43. The photosensitive drum 44 is provided with a cartridge coupling 60 on an axial end of the photosensitive drum 44. When the process cartridge 40 is mounted to the main assembly of the apparatus, a cartridge coupling 60 engages with a main assembly coupling 61 provided in the main assembly of the apparatus, so that the driving force is transmitted. A driving force is transmitted to the developing roller 68 through the idler gears 65 and 66 from the input gear 64 as the development driving force transmission member provided on the pin 43 of the developing unit 42. When the process cartridge 40 is mounted to the main assembly of the apparatus The input gear 64 is engaged with the gear 67 provided in the main assembly of the apparatus, and the engagement to receive the driving force., More particularly, the drive transmissions to the photosensitive drum 44 and to the developing roller 68 from the main assembly of the apparatus are carried out independently from each other.

However, recently, further downsizing and image quality improvement of the process cartridge and the electrophotographic image forming apparatus are desired. The input gear is provided on the swing center which does not change in the position even if the developing unit swings in the conventional example. For this reason, the developing roller requires a space in order to receive the driving force from the input gear through the idler gear of the process cartridge. The rotational accuracy of the developing roller is influenced by the engagement among the input gear, the idler gear, and the main assembly gear.

The present invention further develops the prior art structures mentioned above.

Accordingly, it is the object of the present invention to provide a process cartridge and a small size electrophotographic image forming apparatus wherein a rotational driving force is directly inputted to the developing roller through the shaft coupling member from the main assembly of the apparatus independently from the driving input to the photosensitive drum,
to provide a process cartridge and an image forming apparatus wherein even after the photosensitive drum and the developing roller have spaced, when the process cartridge is mounted, the engaging portion and a second main assembly drive transmission member of a shaft coupling member engage with each other, smoothly, and
to provide a process cartridge and an image forming apparatus wherein the rotational accuracy of the developing roller is improved, so that the image quality is improved.

The object of the invention is achieved by a process cartridge according to claim 1. Advantageous embodiments are carried out according to the dependent claims.

According to the present invention, there is provided a process cartridge detachably mountable to a main assembly of an electrophotographic image forming apparatus, wherein the main assembly includes a rotatable first main assembly drive transmission member and a rotatable second main assembly drive transmission member, said process cartridge comprising an electrophotographic photosensitive drum; a drum unit containing said electrophotographic photosensitive drum; a developing roller for developing an electrostatic latent image formed on said electrophotographic photosensitive drum with a developer; a developing unit containing said developing roller and movably connected with said drum unit, said developing unit being movable relative to said drum unit between a contact position in which said developing roller is contacted to said electrophotographic photosensitive drum and a spaced position in which said developing roller is spaced from said electrophotographic photosensitive drum; a drum coupling member, provided on one axial end of said electrophotographic photosensitive drum, for engaging with the first main assembly drive transmission member and transmitting a first rotational driving force to the electrophotographic photosensitive drum, when said process cartridge is mounted to the main assembly of the apparatus along an axial direction of said electrophotographic photosensitive drum; and a shaft coupling member, provided on one axial end of said developing roller, for transmitting a second rotational driving force with a deviation permitted between an axis of the second main assembly drive transmission member and an axis of said developing roller, wherein said shaft coupling member includes an engaging portion for engaging with the second main assembly drive transmission member and receiving the second rotational driving force, when said process cartridge is mounted to the main assembly of the apparatus; said engaging portion is movable in a direction crossing with the axial direction of said developing roller; and when said process cartridge enters said main assembly of the apparatus with said developing unit positioned in the spaced position , an axis of said engaging portion is deviated from the axis of said developing roller with respect to the crossing direction.

According to the present invention, there is provided an electrophotographic image forming apparatus for forming an image on a recording material, comprising (i) a rotatable first main assembly drive transmission member and a rotatable second main assembly drive transmission member; (ii) a process cartridge mounted detachably to the main assembly of the apparatus of said electrophotographic image forming apparatus; said process cartridge including: an electrophotographic photosensitive drum; a drum unit containing said electrophotographic photosensitive drum; a developing roller for developing an electrostatic latent image formed on said electrophotographic photosensitive drum with a developer; a developing unit containing said developing roller and movably connected with said drum unit, said developing unit being movable relative to said drum unit between a contact position in which said developing roller is contacted to said electrophotographic photosensitive drum and a spaced position in which said developing roller is spaced from said electrophotographic photosensitive drum; a drum coupling member, provided on one axial end of said electrophotographic photosensitive drum, for engaging with the first main assembly drive transmission member and transmitting a first rotational driving force to the electrophotographic photosensitive drum, when said process cartridge is mounted to the main assembly of the apparatus along an axial direction of said electrophotographic photosensitive drum; a shaft coupling member, provided on one axial end of said developing ro.ller, for transmitting a second rotational driving force with a deviation permitted between an axis of the second main assembly drive transmission member and an axis of said developing roller, wherein said shaft coupling member includes an engaging portion for engaging with the second main assembly drive transmission member and receiving the second rotational driving force, when said process cartridge is mounted to the main assembly of the apparatus; said engaging portion is movable in a direction crossing with the axial direction of said developing roller; when said process cartridge-enters said main assembly of the apparatus with said developing unit positioned in the spaced position , an axis of said engaging portion is deviated from the axis of said developing roller with respect to the crossing direction; and (iii) feeding means for feeding the recording material.

The object, features, and advantages of the present invention will become more apparent upon consideration of the following description of the preferred embodiments of the present invention, taken in conjunction with the accompanying drawings.
Figure 1 is a general arrangement of a color electrophotographic image forming apparatus according to Embodiment 1 of the present invention.
Figure 2 is a cross-sectional illustration of a process cartridge according to Embodiment 1.
Figure 3 is an outer appearance perspective view of the process cartridge according to Embodiment 1.
Figure 4 is a perspective view of a developing unit according to Embodiment 1.
Figure 5 is a schematic illustration which illustrates a mounting operation of the process cartridge relative to the main assembly of the image forming apparatus by Embodiment 1.
Figure 6 is a perspective view of the process cartridge positioned in the main assembly of the image forming apparatus in Embodiment 1.
Figure 7 is a sectional view which illustrates a developing device spacing operation in Embodiment 1.
Figure 8 is a sectional view which illustrates a developing device contacting operation in Embodiment 1.
Figure 9 is a perspective view of the process cartridge in the state before mounting to the main assembly of the image forming apparatus of the process cartridge in Embodiment 1.
Figure 10 is a perspective view of the process cartridge which is released by the developing device separation member of the process cartridge in the Embodiment 1.
Figure 11 is an operation illustration of the developing device separation member of the process cartridge in Embodiment 1.
Figure 12 is illustrates a supporting structure of a developing roller in Embodiment 1.
Figure 13 is an exploded view of a shaft coupling member in Embodiment 1.
Figure 14 is a cross-sectional illustration of a shaft coupling member in Embodiment 1.
Figure 15 is a perspective view of a shaft coupling member of the developing unit in Embodiment 1.
Figure 16 is a perspective view which illustrates a first main assembly driving member and a second main assembly driving member of the image forming apparatus in Embodiment 1.
Figure 17 is a side view which illustrates an operation of the shaft coupling member at the time of the separating operation of the developing unit in Embodiment 1.
Figure 18 is a schematic illustration which illustrates an operation of the shaft coupling member at the time of the separating operation of the developing unit in Embodiment 1.
Figure 19 is a side view which illustrates an operation of the shaft coupling member at the time of a contacting operation of the developing unit in Embodiment 1.
Figure 20 is a schematic illustration which illustrates an operation of the shaft coupling member at the time of a contacting operation of the developing unit in Embodiment 1.
Figure 21 is a side view which illustrates positioning of the shaft coupling member in Embodiment 2 of the present invention.
Figure 22 is a perspective view which illustrates a shaft coupling portion in embodiment 3 of the present invention.
Figure 23 is a schematic illustration which illustrates an operation of a shaft coupling member at the time of the separating operation of the developing unit in Embodiment 3.
Figure 24 is a perspective view of a state before carrying out remounting of the process cartridgein Embodiment 1 to the main assembly of the image forming apparatus.
Figure 25 is a perspective view when carrying out remounting of the process cartridge in Embodiment 1 to the main assembly of the image forming apparatus.
Figure 26 is a view which illustrates a structure for carrying out remounting of the process cartridge in Embodiment 1 to the main assembly of the image forming apparatus.
Figure 27 is a schematic illustration which illustrates a mounting operation for the process cartridge in Embodiment 1 to the main assembly of the image forming apparatus.
Figure 28 is a schematic illustration which illustrates an operation of a shaft coupling member at the time of the separating operation of the developing unit in Embodiment 1.
Figure 29 is a perspective view which illustrates a shaft coupling member in the embodiment 3 of the present invention.
Figure 30 is a side view which illustrates a holding structure of the shaft coupling member in embodiment 4 of the present invention.
Figure 31 is a side view which illustrates a holding structure of the shaft coupling member in the embodiment 4 of the present invention.

The preferred embodiments of the present invention will be described in conjunction with the accompanying drawings.

### Embodiment 1

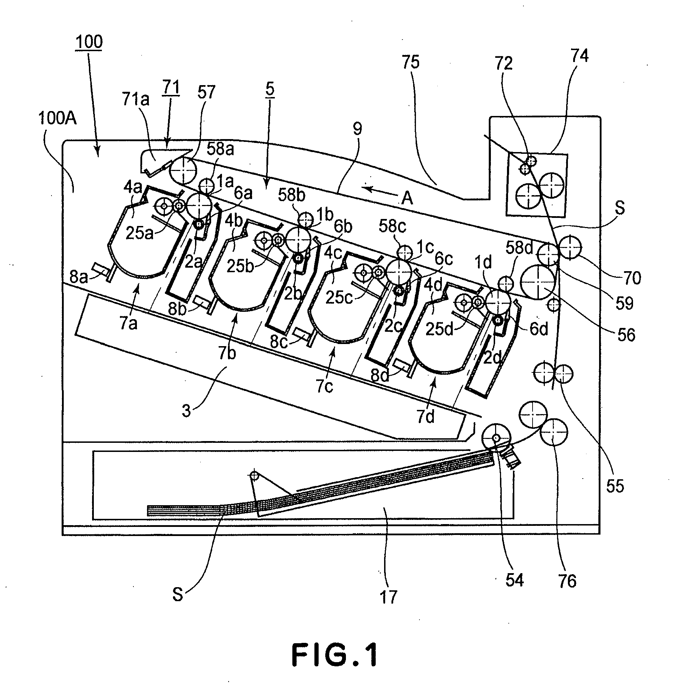

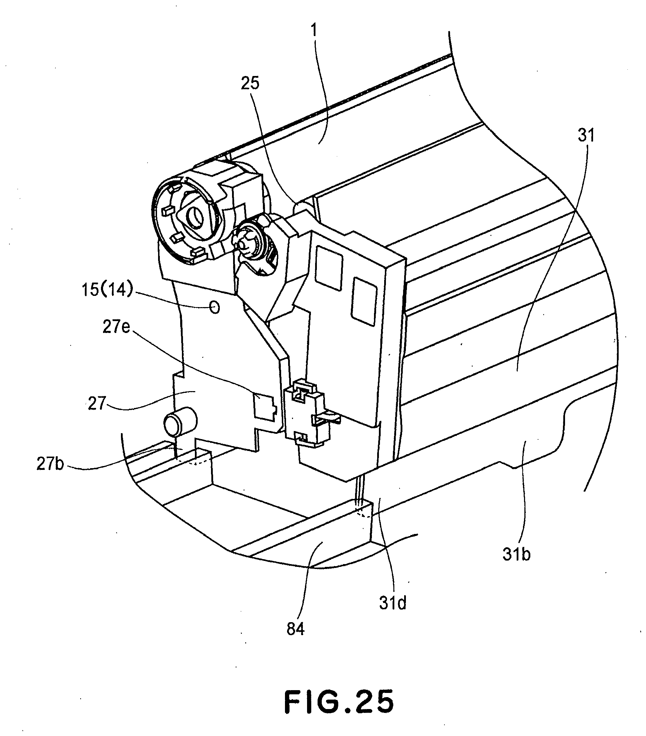

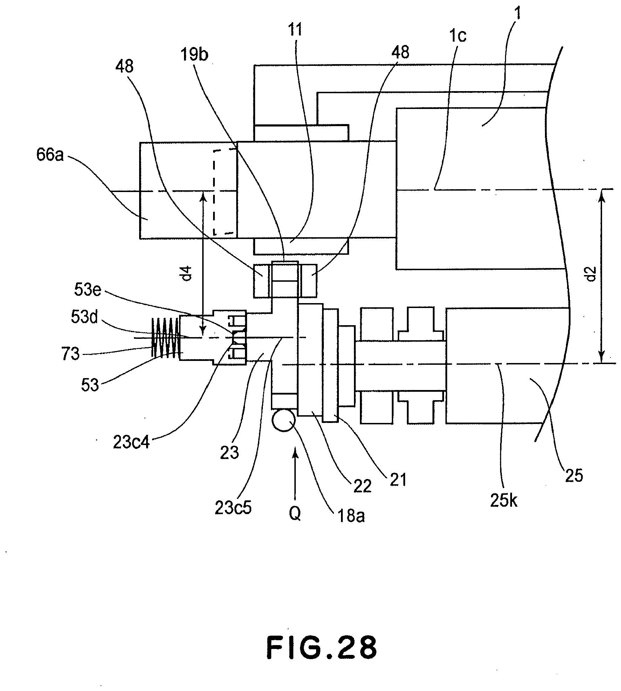

Referring to Figure 1 - Figure 20, Figure 24 - Figure 28, the process cartridge and the electrophotographic image forming apparatus according to an embodiment of the present invention will be described.

Figure 1 illustrates a general arrangement of the color electrophotographic image forming apparatus according to this embodiment.

### General arrangement of image forming apparatus

Figure 1 shows a general arrangement of an electrophotographic image forming apparatus (hereinafter, image forming apparatus) 100. As shown in Figure 1, four detachably mountable process cartridges 7 (7a, 7b, 7c, 7d) are mounted by mounting members (unshown). In Figure 1, the process cartridges 7 are inclined relative to the horizontal direction in the main assembly of the apparatus 100.

Each process cartridge 7 has an electrophotographic photosensitive member drum (hereinafter, photosensitive drum) 1 (1a, 1b, 1c, 1d). Around the photosensitive drum 1 of the process cartridge 7, there are provided process means, such as a charging roller 2 (2a, 2b, 2c, 2d), a developing roller 25 (25a, 25b, 25c, 25d), and a cleaning member 6 (6a, 6b, 6c, 6d), are provided integrally. The charging roller 2 has a function of charging the surface of the photosensitive drum 1 uniformly. The developing roller 25 has a function of developing, with the toner, a latent image formed on the photosensitive drum 1 into a visualized image. The cleaning member 6 removes the toner which remains on the photosensitive drum 1, after the developer image formed on the photosensitive drum 1 is transferred onto a recording material.

A scanner unit 3 for forming the latent image on the photosensitive drum 1 by exposing the photosensitive drum 1 selectively on the basis of the image information, is provided in a lower part of the process cartridge 7.

A cassette 17 which contains the recording materials S is provided in a lower position of the main assembly 100A of the apparatus. A recording material feeding means is provided so that the recording material S passes through a secondary transfer roller 70 portion and a fixing portion 74 portion to the upper portion of apparatus main assembly A. In the detail, it comprises a feeding roller 54 for carrying out the separation and feeding of the recording materials S from the cassette 17 one by one. It further comprises a conveying roller pair 76 for feeding the fed recording material S, and a resist roller pair 55 for synchronizing latent image formed on the photosensitive drum 1 with the recording material S. In an upper part of the process cartridge 7 (7a, 7b, 7c, 7d), an intermediary transfer unit 5 as the intermediary transfer means for transferring the toner images formed on the photosensitive drums 1 (1a, 1b, 1c, 1d), is provided. The intermediary transfer unit 5 comprises a driving roller 56 and a follower roller 57. It further comprises primary transfer rollers 58 (58a, 58b, 58c, 58d) provided in the position opposed to the photosensitive drum 1 for each color, and an opposing rollers 59 opposed to a secondary transfer roller 70, respectively. A transfer belt 9 is extended around the rollers. The circulative movement of the transfer belt 9 is carried out contacting to all the photosensitive drums 1. By applying a voltage to the primary transfer rollers 58 (58a, 58b, 58c, 58d), the toner images are transferred primarily onto the transfer belt 9 from the photosensitive drums 1. The voltage is applied between the opposition 59 rollers disposed in the transfer belt 9, and the secondary transfer rollers 70 to transfer the toner image from the transfer belt 9 onto the recording material S.

Each photosensitive drum 1 is rotated in the image forming operation and the drum 1 is charged uniformly by the charging roller 2. Subsequently, the photosensitive drum 1 is selectively exposed with the scanner unit 3. By doing so, an electrostatic latent image is formed on the photosensitive drum 1. The latent image is developed by the developing roller 25. This forms the color developer image on each photosensitive drum 1. In synchronism with this image formation, a resist roller pair 55 feeds the recording material S to the secondary transfer position where the opposing roller 59 and the secondary transfer roller 70 are opposed to each other with the transfer belt 9 therebetween. An image transfer bias voltage is applied to the secondary transfer roller 70 to transfer the secondary color developer images on the transfer belt onto the recording material S. By doing so, a color image is formed on the recording material S. The recording material S which has the formed color image is heated and pressed by the fixing portion 74, so that the developer image is fixed. Thereafter, the recording material S is discharged to the discharging portion 75 by the discharging roller 72. The fixing portion 74 is disposed in the upper position of Main assembly of the apparatus A.

### Process cartridge

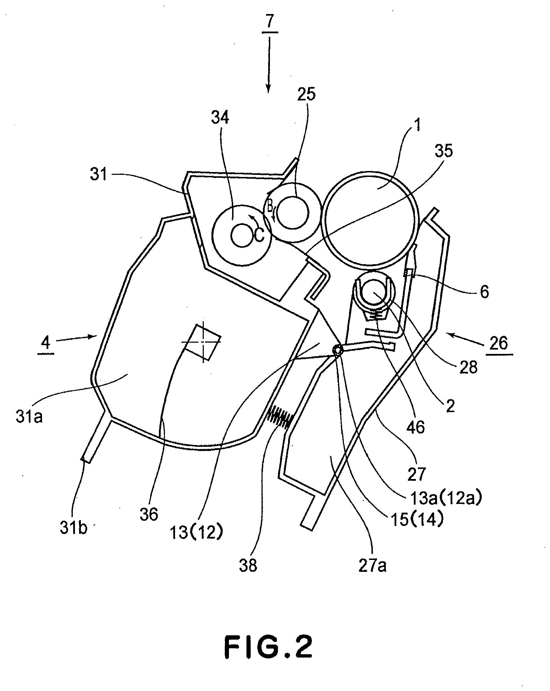

Referring to Figure 2 - Figure 4, the process cartridge 7 of this embodiment will be described. Figure 2 is a major section of the process cartridge 7 which contains the developer (hereinafter, toner). A cartridge 7 which contains the toner of the yellow color, a cartridge 7b which contains the toner of a magenta color, a cartridge 7c which contains the toner of the cyan color, and a cartridge 7d which contains the toner of the black color, have the same structures.

Each process cartridge 7 (7a, 7b, 7c, 7d) includes a drum unit 26 (26a, 26b, 26c, 26d) as a first frame, and a developing unit 4 (4a, 4b, 4c, 4d) as a second frame. The drum unit 26 is provided with the photosensitive drum 1 (1a, 1b, 1c, 1d), and the charging roller 2 (2a, 2b, 2c, 2d) and the cleaning member 6 (6a, 6b, 6c, 6d). And, the developing unit 4 is provided with a developing roller 25.

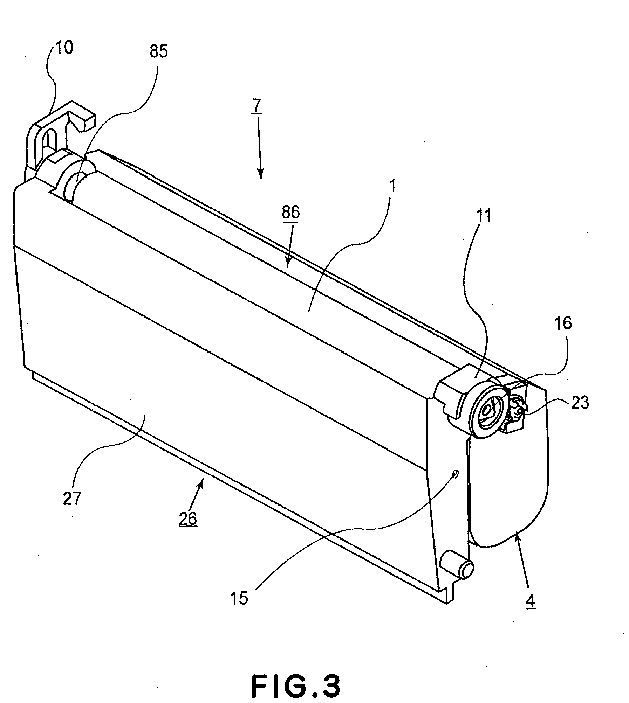

The drum unit 26 includes a cleaning frame 27 and the photosensitive drum 1 is rotatably mounted to it through a drum-front bearing 10 and a drum-rear bearing 11 (Figure 3). The end of the photosensitive drum 1 is provided with the drum coupling 16 and the flange 85.

Around the photosensitive drum 1, as mentioned above, the charging roller 2 and the cleaning member 6 are disposed. The residual toner removed by the cleaning member 6 from the photosensitive drum 1 surface is let fall in a removed toner chamber 27a. A driving force is transmitted to the drum unit 26 from a main assembly driving motor (unshown) as a driving source, so that the photosensitive drum 1 is rotated correspondingly to the image forming operation process. The charging roller 2 is rotatably mounted to the cleaning frame 27 through the charging roller bearings 28. And, it is pressed by a charging roller pressing member 46 toward the photosensitive drum 1, by which it is rotated by the photosensitive drum 1.

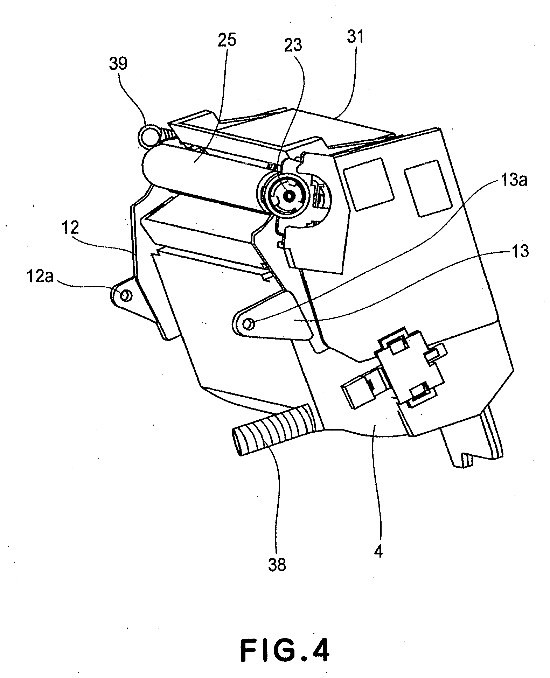

The developing unit 4 comprises a developing roller 25 which contacts with the photosensitive drum 1 and is rotated in the direction of arrow B, and a developing device frame 31 for supporting the developing roller 25. The developing roller 25 is rotatably supported on the developing device frame 31 through a developing-device-front bearing 12 and a developing-device-rear bearing 13 which are mounted to the respective sides of the developing device frame 31 (Figure 4). A toner supplying roller 34 rotates in the direction of arrow C, contacting to the outer periphery of the developing roller 25. A developing blade 35 regulates the toner layer thereon, contacting to the outer periphery of the developing roller 25. In the toner accommodating portion 31a of the developing device frame 31, the toner feeding member 36 for agitating the contained toner and for feeding the toner to the toner supplying roller 34 is provided.

Figure 3 is an outer appearance perspective view of the process cartridge 7. The developing unit 4 is rotatably mounted to the drum unit 26. A front supporting pin 14 and a rear supporting pin 15 which are press-fitted in the cleaning frame 27 are engaged into the hanging holes 12a and 13a of the developing-device-front bearing 12 and the developing-device-rear bearing 13. By doing so, the developing unit 4 is rotatably supported about the axis of the supporting pins 14 and 15 to the cleaning frame 27 (Figure 2). The cleaning frame 27 is provided with a drum-front bearing 10 and a drum-rear bearing 11 for supporting the photosensitive drum 1 rotatably. The drum-rear bearing 11 supports a drum coupling 16 connected with the photosensitive drum 1. The drum-front bearing 10 supports the flange 85. The drum coupling 16 transmits the rotational driving force (first rotational driving force) to the photosensitive drum 1 from the main assembly 100A of the apparatus.

The developing unit 4 shown in Figure 4 is urged to the drum unit 26 by a pressing spring 38 provided in the developing device frame 31, and a tension spring (unshown) provided in the developing-device-front bearing 12 during the image formation of the process cartridge 7. The developing roller 25 is revolved by the pressing springs 38 and the tension spring 39 about the holes 12a and 13a of the developing-device-front bearing 12 and the developing-device-rear bearing 13, so that it is contacted to the photosensitive drum 1.

In a contact type developing system which effects the development with the contact between the photosensitive drum 1 and the developing roller 25, it is desirable that the photosensitive drum 1 is a rigid member and the developing roller 25 is an elastic member. This elastic member may be a solid rubber monolayer, and it may have the solid rubber layer and a resin material coating thereon in consideration of the charging application property to the toner.

The image forming operation of the process cartridge 7 will be described (Figure 1 and Figure 2). When the image information is supplied to the image forming apparatus 100, the main assembly driving motor (unshown) starts the rotation and the rotational driving force is transmitted to the photosensitive drum 1, to the developing roller 25, to the toner supplying roller 34, and to the toner feeding member 36. The charging bias voltage is applied to the charging roller 2 from the main assembly 100A of the apparatus to charge electrically the surface of the photosensitive drum 1 uniformly. Corresponding to the image information, the exposure is effected by the scanner unit 3, so that a latent image is formed on the photosensitive drum 1.

The toner in the toner accommodating portion 31a is fed by the rotation of the toner feeding member 36 to the toner supplying roller 34. The toner supplying roller 34 rotates to supply the toner to the outer periphery of the rotating developing roller 25. The supplied toner is triboelectrically charged by the developing blade 35 on the outer periphery of the developing roller 25. The developing bias voltage is applied to the developing roller 25 from the voltage source portion (unshown) provided in the image forming apparatus 100. By doing so, the electrostatic latent image formed on the photosensitive drum 1 is developed. Here, the developing roller 25 is provided opposed to the photosensitive drum 1. The developing roller 25 is contacted to the photosensitive drum 1 and develops the electrostatic latent image formed on the photosensitive drum 1.

### Mechanism for mounting process cartridge to main assembly of image forming apparatus

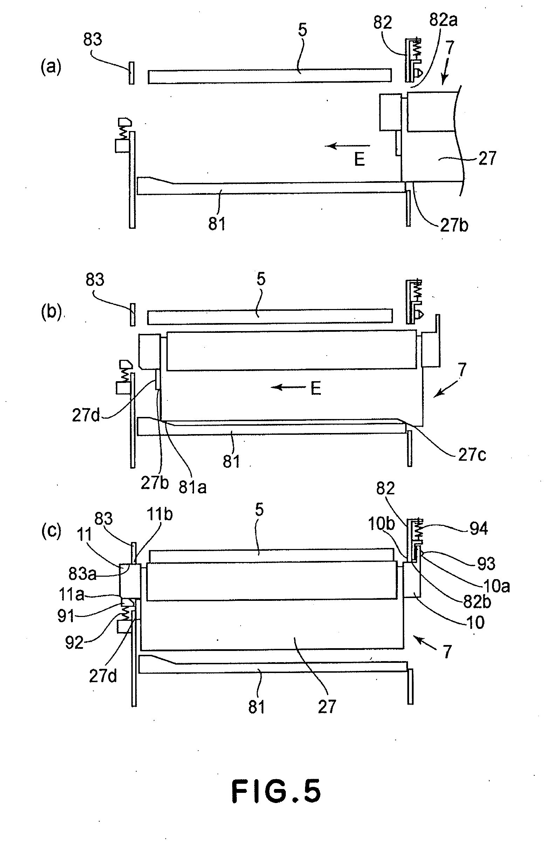

Referring to Figure 5, the mounting mechanism, according to this embodiment, for mounting the process cartridge 7 in the apparatus main assembly 100A will be described.

In Figure 5, (a) illustrates a state before the setting, in the apparatus main assembly 100A, of the process cartridge 7. In the state of (a), the process cartridge 7 is mounted in the direction of arrow E through an opening 82a provided in a front side plate 82 of the apparatus main assembly 100A. In that case, a guide portion 27b integrally provided in the cleaning frame 27 of the process cartridge 7 is guided on a main assembly guide member 81 provided in the main assembly 100A of the apparatus. The main assembly guide member 81 is the mounting member for mounting the process cartridge 7 dismountably.

In Figure 5, (b) illustrates the state where the mounting of the process cartridge 7 to the apparatus main assembly 100A is completing. The guiding member 81 provided in the main assembly 100A of the apparatus is provided with an inclined portion 81a inclined upwardly toward downstream with respect to the mounting direction. The cleaning frame 27 is provided with a downwardly inclined portion 27c in an upstream end with respect to the mounting direction. When the process cartridge 7 is mounted to the apparatus main assembly 100A, the guide portion 27b of the cleaning frame 27 rides on the inclined portion 81a, and the inclined portion 27c rides on the main assembly guide portion 81. By doing so, the process cartridge 7 is displaced toward the intermediary transfer unit 5 (upwardly).

In Figure 5, (c) illustrates the state where the process cartridge is mounted to the main assembly 100A of the apparatus. When the mounting operation of the process cartridge 7 is further continued in after the process cartridge 7 moves toward the intermediary transfer unit 5, the abutting portion 27d provided integrally on the cleaning frame 27 contacts to a rear side plate 83 of the apparatus main assembly 100A. By doing so, the mounting of the process cartridge 7 to the image forming apparatus 100 completes.

In this state, a portion-to-be-urged 11a of the drum-rear bearing 11 contacts with the back pressed member 91 provided in the rear side plate 83, so that it is upwardly pushed by the pressing spring 92. And, the cartridge positioning portion 11b provided in the upper position of the drum-rear bearing 11 contacts to the abutting portion 83a, which functions as the main assembly positioning portion, of the rear side plate 83, by which the process cartridge 7 is positioned relative to the apparatus main assembly 100A in the rear side.

In addition, a portion-to-be-pulled 10a of the drum-front bearing 10 engages with the pulling member 93 provided in a front side plate 82. The pulling member 93 is upwardly raised by a tension spring 94 provided on the front side plate 82, and by doing so, the portion-to-be-pulled 10a is also upwardly raised. And, an abutting portion 10b which is cartridge positioning portion for the drum-front bearing 10 contacts to a positioning portion 82b which is the main assembly positioning portion of the main assembly front side plate 82, so that the process cartridge 7 is positioned relative to the apparatus main assembly 100A in the front side.

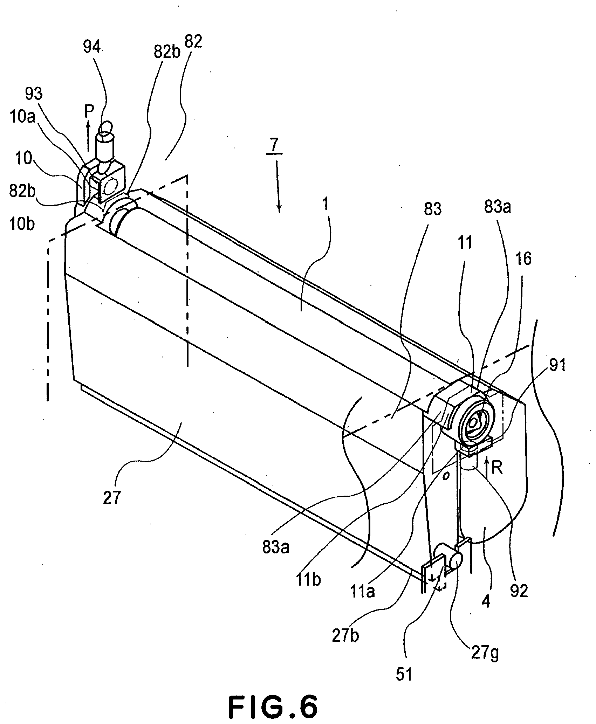

As shown in Figure 6, the abutting portion 83a substantially has V configuration, and contacts to the positioning surface 11b of the drum-rear bearing 11. The drum-front bearing 10 is pulled in the direction of Arrow P by the locking with the portion-to-be-pulled 10a of the drum-front bearing 10 of the pulling member 93 provided in the front side plate 82. Relating to positioning, it is contacted to the drum positioning portion 82b which is provided in the front side plate 82 and which has a substantially V configuration, similarly to the case of the drum-rear bearing 11. The pressure required for the positioning, relative to the main assembly 100A of the apparatus, of the drum-front bearing 10 and the drum-rear bearing 11, is applied in the direction of Arrows P and R. Therefore, the process cartridge 7 is positioned, namely the drum-front bearing 10 and the drum-rear bearing 11 which support the photosensitive drum 1 rotatably can be correctly positioned relative to the main assembly 100A of the apparatus. In addition, the cleaning frame 27 is provided with a boss 27g which functions as a rotation stopper for the process cartridge 7 on the side surface, and the boss 27g engages with the rotation stopper receptor member 51 provided in the apparatus main assembly 100A. By doing so, the rotation in the apparatus main assembly 100A of the process cartridge 7 is prevented. For easy understanding of the description, the driving side engaging portion 23 is omitted in Figure 6.

### Mechanism for spacing between photosensitive drum and developing roller in process cartridge

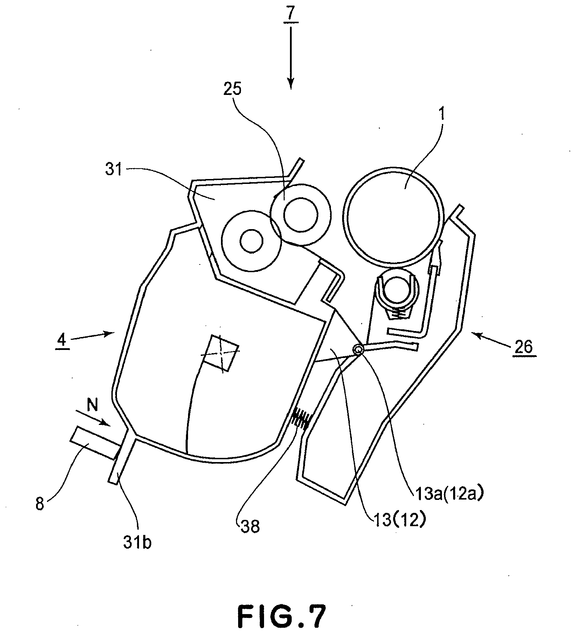

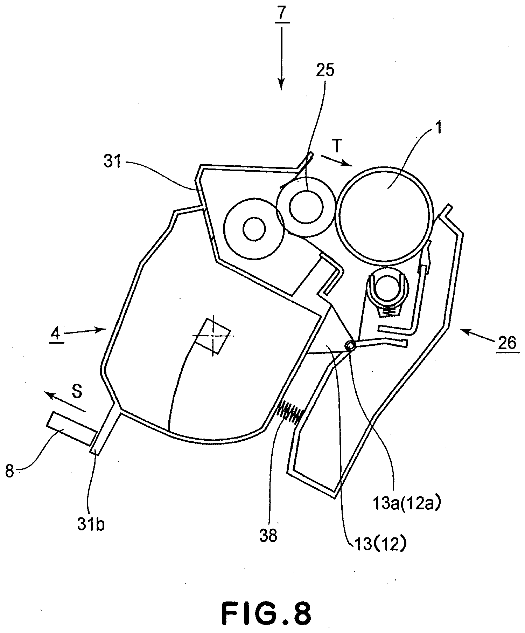

Referring to Figure 7 - Figure 11, a spacing mechanism between the photosensitive drum 1 and the developing roller 25 in the process cartridge 7 of this embodiment will be described. In Figure 7, the image forming apparatus 100 (unshown) is provided with a spacer member 8 in a predetermined position with respect to the longitudinal direction of the process cartridge 7. The developing unit 4 of the process cartridge 7 receives a force in a direction of arrow N from the movable spacer member 8 at a force receiving portion 31b of the developing device frame 31, so that the developing roller 25 is spaced from the photosensitive drum 1 (spaced position). As shown in Figure 8, when the spacer member 8 is moved in the direction of an arrow S and it disengages from the force receiving portion 31, the developing unit 4 is rotated in a direction of arrow T by the urging forces of a pressing spring 38 and a tension spring (unshown) about the holes 12a and 13a of the developing-device-front bearing 12 and the developing-device-rear bearing 13. By doing so, the developing unit 4 moves to a contact position, and the developing roller 25 and the photosensitive drum 1 are contacted to each other. The developing unit 4 is retained in the spaced position of Figure 7 except during the image forming operation, by this spacing structure. By doing so, the influence to the image quality attributable to deformation of the developing roller 4 is suppressed.

### Developing device separation holding member

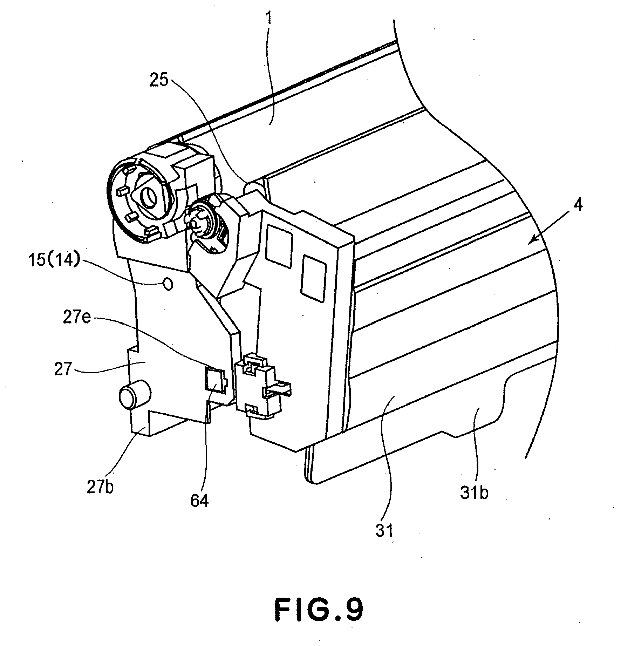

Figure 9 illustrates the initial state before mounting the process cartridge 7 to the main assembly 100A of the apparatus (entrance). In this state, the developing unit 4 is provided with the space holding member 64 for retaining the developing unit 4 in the spaced position by process cartridge 7 alone so that the space holding member 64 locks with the hole 27e provided in the side surface of the cleaning frame 27 to retain the developing roller 25 in the state of being spaced from the photosensitive drum 1. The position of the space holding member 64 at this time is an engagement position.

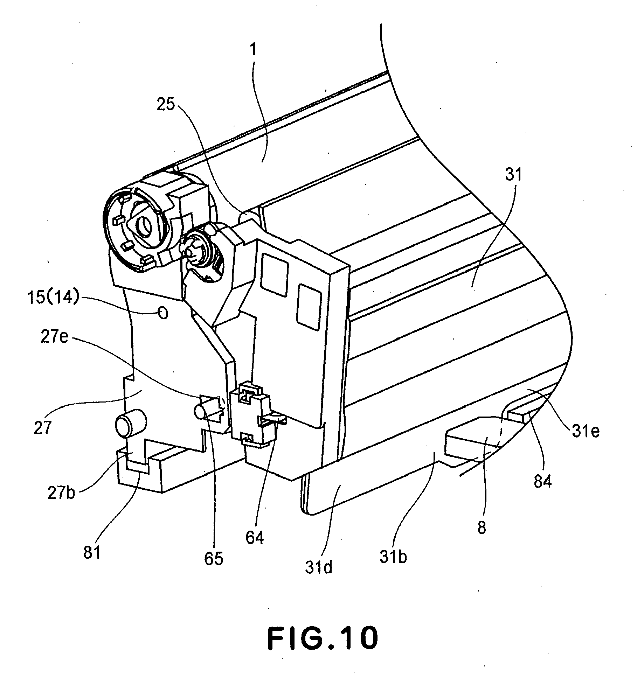

As shown in Figure 10, when the process cartridge 7 is mounted to the main assembly 100A of the apparatus, a main assembly releasing member 65 contacted to the space holding member 64 is provided in the apparatus main assembly 100A. Immediately before the process cartridge 7 is positioned by the main assembly positioning portions 82b and 83a (Figure 6 reference) of the main assembly 100A of the apparatus, the main assembly releasing member 65 contacts with the space holding member 64, by which the locking between the space holding member 64 and the hole 27e is released. The position of the space holding member 64 at this time is the releasing position. When the space holding member 64 is released, it enables the developing roller 25 to contact to the photosensitive drum 1. Normally, however, in the state where the process cartridge 7 is mounted to the main assembly 100A of the apparatus, the spacer member 8 provided in the main assembly 100A of the apparatus contacts to the force receiving portion 31b of the developing device frame 31 (Figure 7). For this reason, even if the process cartridge 7 is mounted to the main assembly 100A of the apparatus, and the space holding member 64 is released, the developing roller 25 is not contacted to the photosensitive drum 1 (Figure 7 reference).

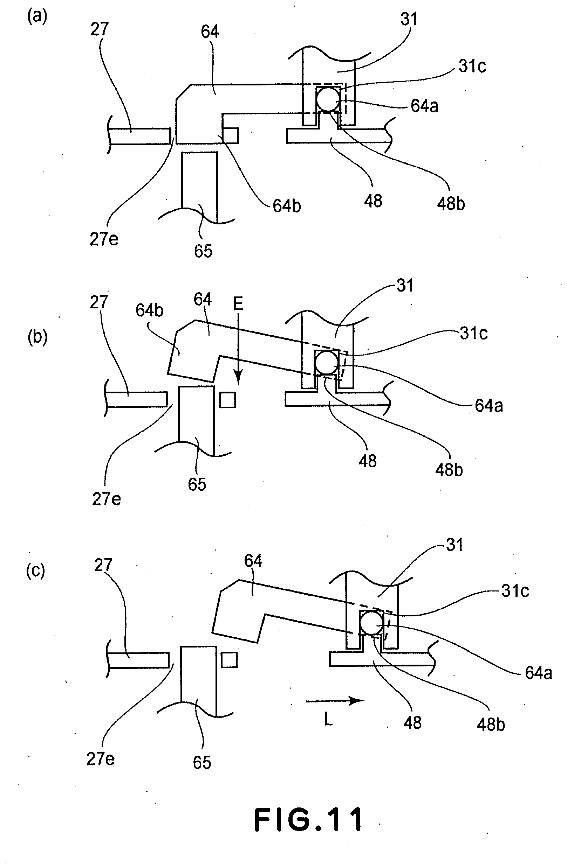

Referring to Figure 11, the releasing method of the space holding member 64 will be described. As shown in Figure 11 (a), the space holding member 64 is provided with a boss 64a. The boss 64a is rotatably supported in a groove 31c formed in the developing device frame 31, and it is confined by a confining portion 48b of the side cover 48. An engaging portion 64b of the space holding member 64 is locked with a hole 27e provided in the cleaning frame 27 again. When the process cartridge 7 is, in this state, moved in the direction of arrow E, as shown in Figure 11 (b), the main assembly releasing member 65 is inserted into the hole 27e of the cleaning frame 27. The main assembly releasing member 65 contacts to the space holding member 64, and the space holding member 64 rotates about the boss 64a, so that the space holding member 64 is released from the cleaning frame 27.

As shown in Figure 11 (c), the developing device frame 31 becomes movable in the direction of Arrow L so that the contact between the unshown photosensitive drum 1 and the unshown developing roller 25 is enabled.

When the image forming operation is started by the printing signal after the mounting operation completes, the spacer member 8 (Figure 8 reference) moves in accordance with the development operation timing, in the direction of arrow S, so that the force receiving portion 31b and the spacer member 8 are spaced from each other. For this reason, the developing unit 4 is moved to the contact position by the elastic force of the pressing spring 38 and the tension spring 39 (Figure 4), so that the developing roller 25 is brought into the state in which the developing operation is possible in contact with the photosensitive drum 1.

When the developing operation is completed, the spacer member 8 is again moved in the direction of arrow N of Figure 7, and it applies the force to the force receiving portion 31b. By doing so, the developing unit 4 is moved to the spaced position, so
that the photosensitive drum 1 and the developing roller 25 are spaced from each other. This spacing state is maintained except during the image formation.

As has been described hereinbefore, the developing unit 4 can select easily the spacing and contact states between the photosensitive drum 1 and the developing roller 25. For this reason, the deformation of the elastic layer can be prevented even if the material of the elastic layer of the developing roller 25 is selected severely.

### Spacing mechanism for remounting of process cartridge

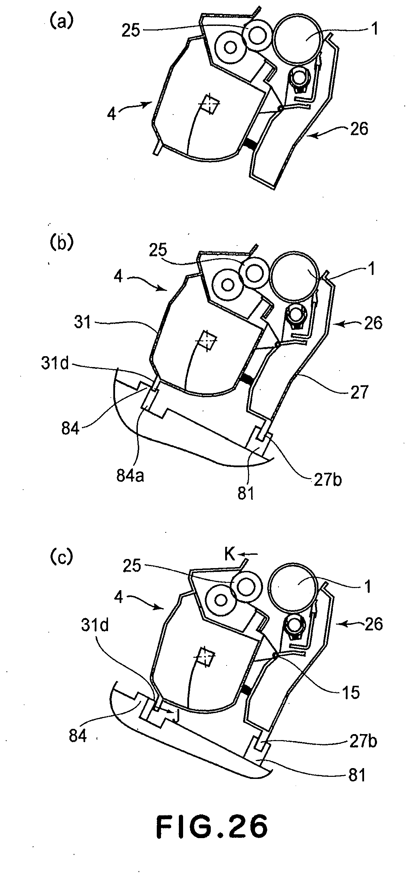

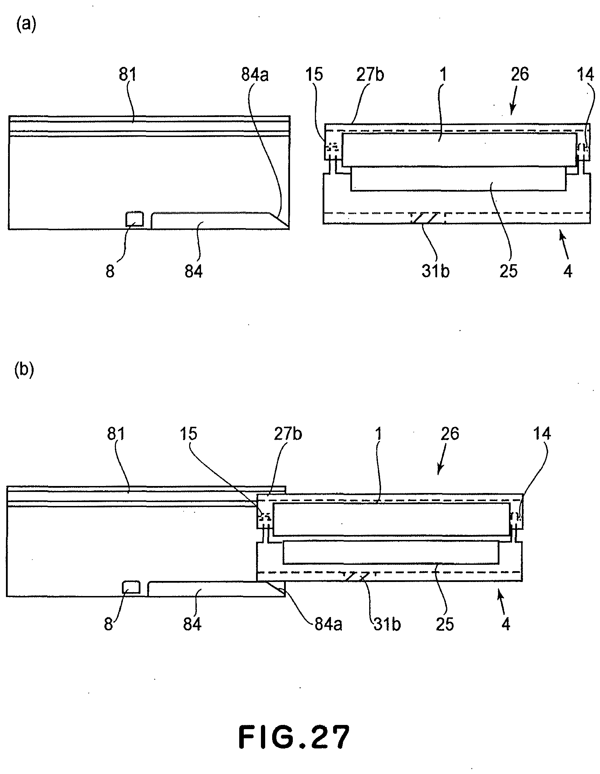

The description will be made about the operation of the spacing mechanism at the time of mounting again the process cartridge 7 having once been taken out of the main assembly 100A of the apparatus, to the main assembly 100A of the apparatus. The space holding member 64 is released from the hole 27e of the cleaning frame 27 in the process cartridge 7 having been taken out of the main assembly 100A of the apparatus. For this reason, the developing unit 4 is in the contact position and the photosensitive drum 1 and the developing roller 25 contact to each other (Figure 26 (a)). In addition, when the process cartridge 7 is demounted from the main assembly 100A of the apparatus, the image forming operation of the electrophotographic image forming apparatus 100 has been finished. For this reason, as shown in Figure 7, in order to maintain the developing unit 4 in the spaced position, the spacer member 8 is in the position contacted to the spacing force receiving portion 31b. When the process cartridge 7 is demounted from the main assembly 100A of the apparatus with this state of the force applying portion 8, the developing unit 4 is restored to the contact position as shown in Figures 26 (a) and 27 (a). In remounting the taken-out process cartridge 7, it is required to move the developing unit 4 to the spaced position again.

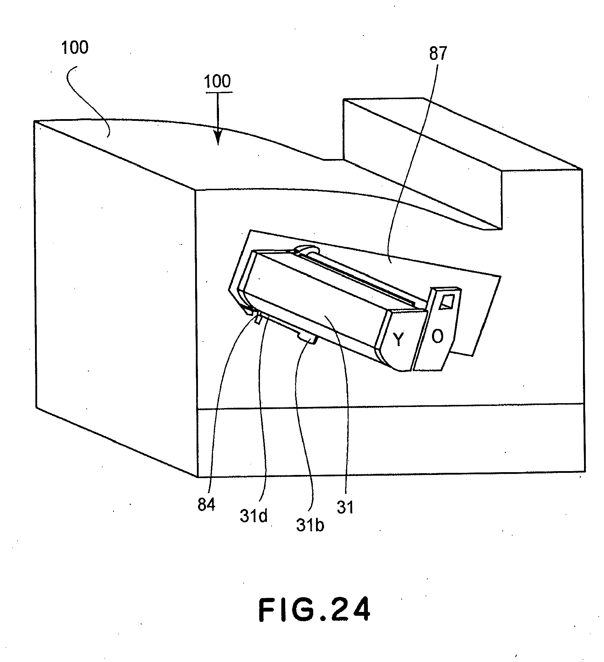

Referring to Figure 24 - Figure 27, the structure for this purpose will be described. As shown in Figure 24, Figure 25 and Figure 27, the main assembly 100A of the apparatus is provided with a mounting opening 87 for permitting mounting the process cartridge 7. Furthermore, the main assembly 100A of the apparatus is provided with spacing guide portion 84 for contacting with spacing force receiving portion 31b provided in the developing unit 4 of the process cartridge 7.

As shown in Figure 26 (a) and Figure 27 (a), before entering the process cartridge 7 the main assembly 100A of the apparatus, the developing unit 4 is in the contact position, and therefore, the photosensitive drum 1 and the developing roller 25 contact to each other. As shown in Figure 26 (b), when the process cartridge 7 is mounted to the main assembly 100A of the apparatus, the guide portion 27b provided in the integral on the cleaning frame 27 is first mounted to the main assembly guide member 81 provided in the main assembly 100A of the apparatus. And, the spacing force receiving portion 31b provided in the developing device frame 31 contacts to inclined bevelled portion 84a of spacing guide portion 84. As shown in Figure 26 (c) and Figure 27 (b), when the process cartridge 7 is further entered, the developing unit 4 rotates in the direction of arrow J around the axis of the back supporting pin 15. By doing so, the developing unit 4 moves to the spaced position of Arrow K, so that the developing roller 25 spaces from the photosensitive drum 1. As shown in Figure 10, when the process cartridge 7 has been positioned by the image forming apparatus 100 main assembly, the spacing force receiving portion 31b is contacted to the spacer member 8 disposed at the downstream with respect to the mounting direction of the spacing guide portion 84. The developing unit 4 is in the spaced position in that case, and therefore the developing roller 25 can mount the process cartridge 7 to the image forming apparatus 100 main assembly, with the state maintained spaced from the photosensitive drum 1. In this case, a clearance 31e provided at upstream.of the force receiving portion 31b relating to the mounting direction of the process cartridge 7 has the configuration not interfering with the mounting guide portion 84. By doing so, the developing unit 4 can move to the contact position, without interfering with the spacing guide portion 84.

### Structures of developing roller supporting portion and developing drive force input portion in process cartridge

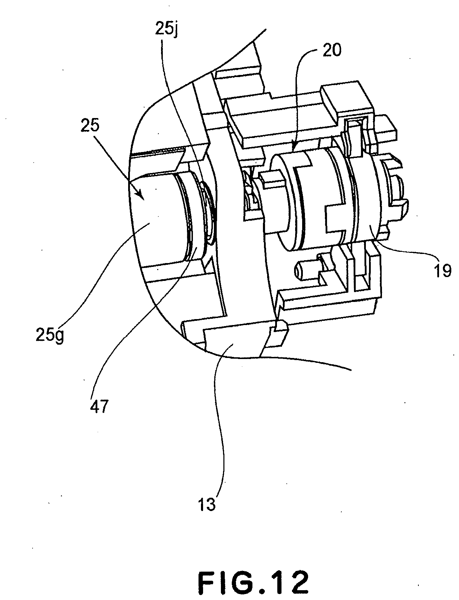

Referring to Figure 12 - Figure 16, the description will be made about the supporting structure for the structure of the developing drive force input portion, and the developing roller 25 in the process cartridge 7 of this embodiment. Figure 12 illustrates one longitudinal end side (rear side) of the supporting portion of the developing roller 25. In Figure 12, the developing roller shaft 25j of the developing roller 25 is rotatably engaged with the inner surface of the developing-device-rear bearing 13. Between the rubber roller portion 25g of the developing roller 25 and the developing-device-rear bearing 13, a regulation roller 47 for regulating the degree of contact, to the photosensitive drum 1, of the developing roller 25 engages with the developing roller shaft 25j rotatably. Heretofore, the supporting structure by the side of the one longitudinal end of the developing roller 25 is described, but the bearing portion is similarly provided to the bearing member integrally at the other end side in the longitudinal direction to support the other end side of the developing roller shaft 25j rotatably.

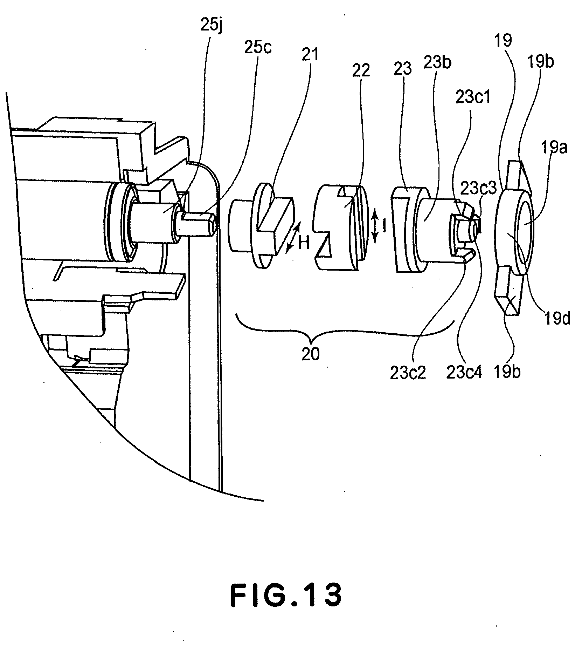

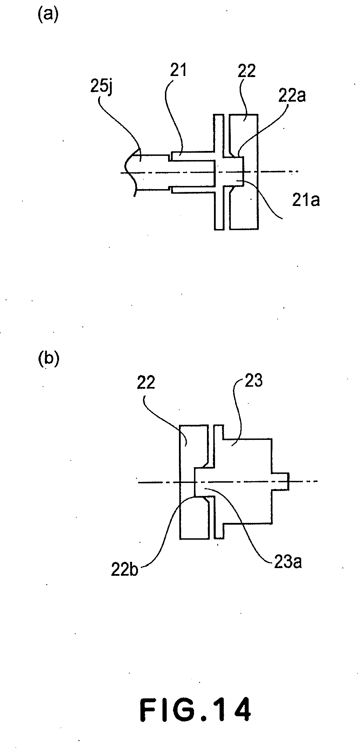

In this embodiment, an Oldham coupling 20 which is a shaft coupling member is used as the developing drive force input portion. Referring to Figure 13 and Figure 14, the structure of the Oldham coupling 20 will be described. For easy understanding of the Oldham coupling 20, the developing-device-rear bearing 13 is omitted, here.

As shown in Figure 13, the Oldham coupling 20 comprises a driven side engaging portion 21, an intermediary engaging portion 22, and a driving side engaging portion 23.

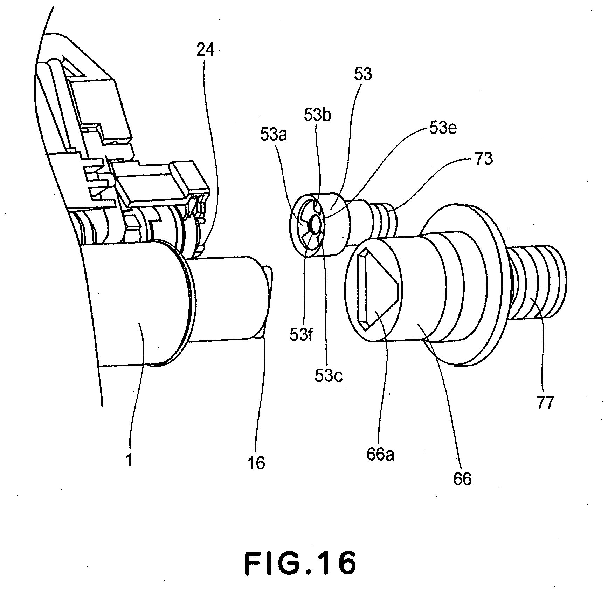

The driven side engaging portion 21 is fixed to the end of the developing roller shaft 25j. As for the fixing method, the spring pin and the parallel pin can be used. In addition, as shown in Figure 13, in an alternative structure, the cut portion 25c is provided on a peripheral surface of the developing roller shaft 25j, and a hole provided in the driven side engaging portion 21 is provided with the complementary configuration. A shaft portion 23b of the driving side engaging portion 23 is rotatably retained in the hole 19a of an engaging portion bearing member 19. The driving side engaging portion 23 is provided integrally with the projections 23c1 to 23c4 engageable with a main assembly development coupling 53(Figure 16) which is a second main assembly drive transmission member of the main assembly 100A of the apparatus, as will be described hereinafter. This Oldham coupling 20 transmits the rotational driving force (second rotational driving force) from the main assembly 100A of the apparatus to the developing roller 25, permitting the deviation between the axis of the main assembly development coupling 53 and the axis of the developing roller 25.

Referring to sectional view of Figure 14, the Oldham coupling 20 will be described in more detail. Figure 14 (a) is the sectional view taken along the surface perpendicular to the direction of arrow H of Figure 13, and Figure 14 (b) is the sectional view taken along the surface perpendicular to the direction of arrow I in Figure 13.

The driven side engaging portion 21 is provided integrally with a rib 21a as shown in Figure 14 (a). A groove 22a is formed on the intermediary engaging portion 22, and the rib 21a and the groove 22a are engaged with each other in Figure 13 for movement in the direction of arrow H.

The driving side engaging portion 23 is provided integrally with a rib 23a as shown in Figure 14 (b) . A groove 22b is formed in the intermediary engaging portion 22, and the rib 23a and the groove 22b are engaged with each other for the movement in the direction of arrow I in Figure 13.

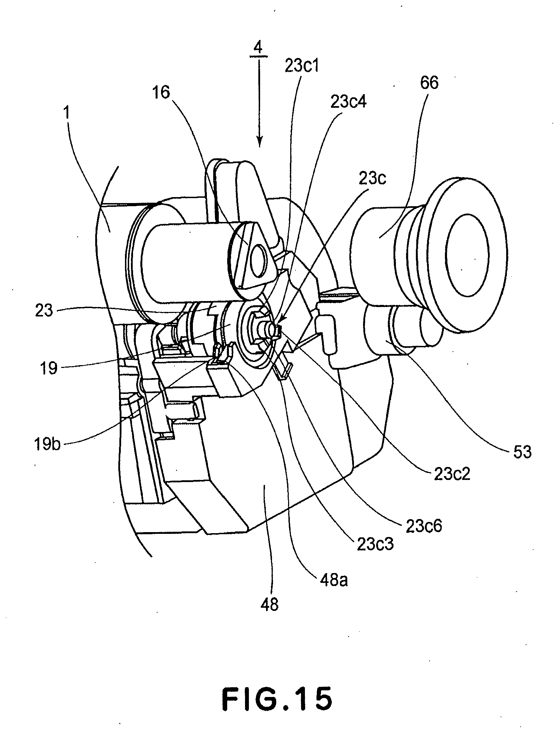

Figure 15 illustrates the structure of the coupling provided in the process cartridge 7. The projections 23c1-23c3 projected toward the axial direction are formed in the end surface of the driving side engaging portion 23 of the Oldham coupling 20 mounted to the developing unit 4. A centering boss 23c4 for alignment (rotation axis) relative to the main assembly development coupling 53 projects in the direction of the axis from the end surface of the driving side engaging portion 23. The one end side of the axial direction of the photosensitive drum 1 is provided with a drum coupling 16 of a triangular prism configuration. A guide portion 19b of the engaging portion bearing member 19 is guided by the groove 48a of a side cover 48 fixed by an unshown screw and so on to the developing unit 4, for movement in the direction crossing with the axial direction of the developing roller 25. In other words, the driving side engaging portion 23 is movable in the direction crossing with the developing unit 4.

Figure 16 illustrates the structure of the coupling provided in the main assembly 100A of the apparatus. As shown in Figure 16, the drum drive coupling 66 which is the first main assembly drive transmission member for transmitting the driving force of the main assembly 100A of the apparatus to the photosensitive drum 1 is provided with a hole 66a which has the section of substantially triangular shape. The main assembly development coupling 53 which is the second main assembly drive transmission member for transmitting the rotational driving force (second rotational driving force) to the developing roller 25 from the main assembly 100A of the apparatus, is provided with holes 53a-53c. The drum drive coupling 66 is urged by a pressing member 77, such as the compression spring, toward the process cartridge 7. The drum drive coupling 66 is movable in the axial direction of the photosensitive drum. When the phase deviation occurs between the drum coupling 16 and the hole 66a of the drum drive coupling 66 at the time of the mounting, to the main assembly 100A of the apparatus, of the process cartridge 7, the drum drive coupling 66 is pushed and retracted by the drum coupling 16. However, the drum coupling 16 and the hole 66a are brought into engagement with each other by the drum drive coupling 66 rotating, so that the rotational driving force is transmitted to the photosensitive drum 1.

The main assembly development coupling 53 is urged by a pressing member 73, such as a compression spring, toward the process cartridge 7 in the direction parallel with the axial direction of the photosensitive drum 1. However, the main assembly development coupling 53 is mounted to the main assembly 100A of the apparatus without play with respect to the direction crossing with the axial direction. In other words, the main assembly development coupling 53 is movable only in the axial direction except during the rotation for the drive transmission.

When the driving side engaging portion 23 and the main assembly development coupling 53 engage with each other by the entrance in the main assembly 100A of the apparatus of the process cartridge 7, a phase deviation may occur between the projections 23cl to 23c3 and the holes 53a-53c. In this case, the free ends of the projections 23c1 to 23c3 abut at the positions other than the holes 53a-53c, and the main assembly development coupling 53 retracts in the axial direction against the urging force of the pressed member 73. However, when the main assembly development coupling 53 rotates and the phases between projections 23c1 - 23c3 and the holes 53a-53c align with each other, the main assembly development coupling 53 is advanced by the urging force of the pressing member 73. The projections 23cl to 23c3 and the holes 53a-53c are brought into the engagement with each other, so that the centering boss 23c4 which is the engaging portion positioning portion and the centering hole 53e which is transmission member positioning portion are engaged with each other. The axis (rotation axis) of the driving side engaging portion 23 and the main assembly development coupling 53 are aligned. The projections 23c1 to 23c3 and the holes 53a-53c are engaged with each other by the main assembly development coupling 53 rotating, so that the rotational driving force is transmitted to the developing roller 25.

Here, the driving, force to the drum drive coupling 66 and to the main assembly development coupling 53 is supplied from a motor provided in the main assembly 100A of the apparatus. One motor may be provided for each of the process cartridges, or commonly for a plurality of the process cartridges.

### Operation of Oldham coupling at the time of development separation-contact operation in process cartridge

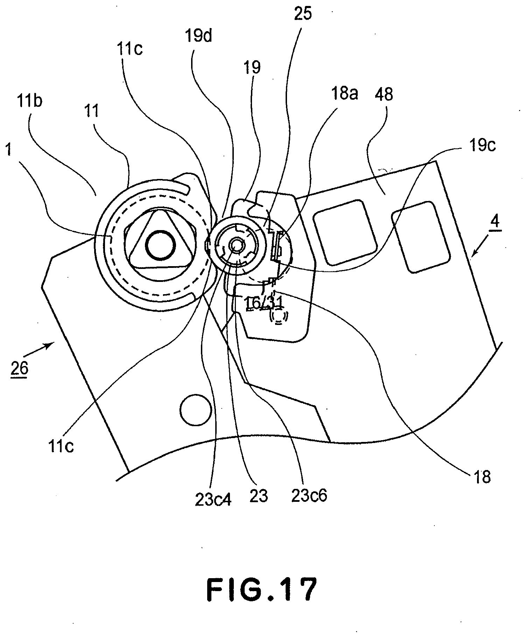

Referring to Figure 17 - Figure 20, the operation of the Oldham coupling 20 at the time of the development separation-contact operation in the process cartridge of this embodiment will be described.

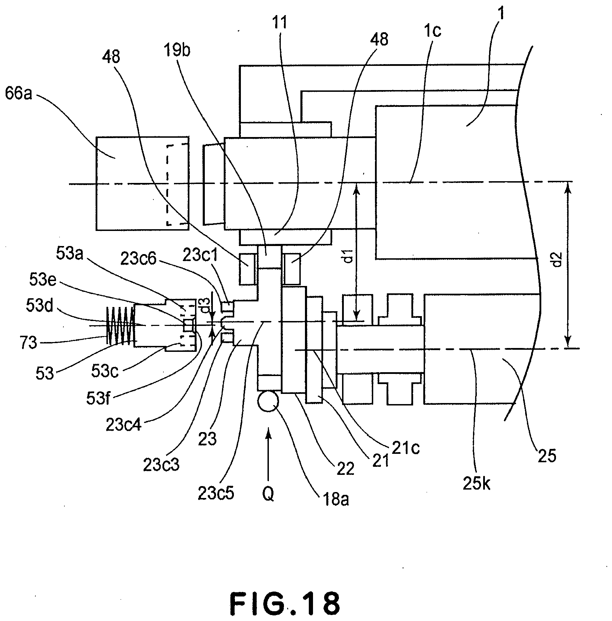

Figure 17 is the side view which illustrates the state where the developing unit 4 is positioned at the spaced position, and Figure 18 is the longitudinal section which illustrates the state where the developing unit 4 positions at the spaced position.

As shown in Figure 17, the developing roller 25 (broken lines) and the photosensitive drum 1 (broken lines) are in the state where it is spaced from each other, in the state where the developing unit 4 is positioned at the spaced position by the space holding member 64 or by the spacing guide portion 84. However, an arm portion 18a of the urging member 18 which is a torsion coil spring provided on the side cover 48 contacts to a locking portion 19c (Figure 17) of the engaging portion bearing member 19. By doing so, the driving side engaging portion 23 is urged in the direction (the direction of arrow Q in Figure 18) crossing with the axial direction of the developing roller 25. The contact portion 19d of the engaging portion bearing member 19 is contacted to the contact portion 11c which is the holding portion provided in the drum-rear bearing 11, so that the position of the engaging portion bearing member 19 is determined. More particularly, the driving side engaging portion 23 is positioned at the predetermined position. Here, a contact portion 11c of the drum-rear bearing 11 is formed by the two surfaces which are in parallel with the axis of the photosensitive drum 1 which constitute the shape of a V configuration. The engaging portion bearing member 19 can be retained in parallel with the axis of the photosensitive drum 1 by contacting the engaging portion bearing member 19 to this contact portion 11c. In addition, the drum-rear bearing 11 is provided integrally with a positioning portion 11b. For this reason, the driving side engaging portion 23 rotatably supported by the engaging portion bearing member 19 is positioned with high precision relative to the rear side plate 83 of the main assembly 100A of the apparatus which positions the positioning portion 11b. Therefore, it is positioned with high precision also relative to the axis 53d of the main assembly development coupling 53 provided in the main assembly 100A of the apparatus. The driving side engaging portion 23 of the Oldham coupling 20 is rotatably engaged with the engaging portion bearing member 19. For this reason, in this state, the axis 23c5 of the driving side engaging portion 23 of the Oldham coupling 20 is shifted (deviated) from the axis 25k of the developing roller 25. And, the axis 23c5 of the driving side engaging portion 23 is nearer than the axis 25k of the developing roller 25 to the axis 53d of the main assembly development coupling 53 of the main assembly 100A of the apparatus. In other words, the position by which the driving side engaging portion 23 is positioned is such a position that when the process cartridge 7 enters into the main assembly 100A of the apparatus, it engages smoothly with the main assembly development coupling 53. Although the means for urging the engaging portion bearing member 19 in this example is the urging member 18, the engaging portion bearing member 19 may be provided integrally with the elastic portion which is elastically deformable, so that the engaging portion bearing member 19 is contacted to the contact portion 11c.

Referring to Figure 18, the still more detailed description will be made. When the main assembly development coupling 53 engages and rotates in the driving side engaging portion 23, the driving side engaging portion 23 is correctly positioned by the main assembly development coupling 53 as will be described hereinafter. By doing so, the contact portion 19b of the engaging portion bearing member 19 spaces from the drum-rear bearing 11, 11c, i.e., from the contact portion. For this reason, when the process cartridge 7 enters the main assembly 100A of the apparatus, the axis 23c5 of the driving side engaging portion 23 begins the engagement in the state where it is shifted from axis 53d of the main assembly development coupling 53 by the distance d3 toward the photosensitive drum 1 side. By the process cartridge 7 further entering from this state, the bevelled portion 23c6 (Figure 15) provided in the centering boss 23c4 and 53f (Figure 16) of bevelled portions provided in
the hole 53e contact to each other, so that they engage, correcting the deviation between axes.

Figure 18 illustrates the state where the developing unit 4 is positioned at the spaced position. In this state, as has been described hereinbefore, the axis 23c5 of the driving side engaging portion 23 and the axis 25k of the developing roller 25 deviate from each other. More particularly, the distance d1 between the axis (rotation axis) 1c of the photosensitive drum 1 and the axis 23c5 of the driving side engaging portion is smaller than the distance d2 between the axis 1c of the photosensitive drum 1, and the axis 25k of the developing roller 25. In other words, the driving side engaging portion 23 is closer to the photosensitive drum 1 than the developing roller 25.

Even if the developing unit 4 is in the state of positioning at the developing position, the intermediary engaging portion 22 is in the engagement with both the driving side engaging portion 23 and the driven side engaging portion 21. For this reason, even when the developing unit 4 moves between the spaced position and the contact positions, the intermediary engaging portion 22 permits those movements, maintaining the engagement with the driving side engaging portion 23 and with the driven side engaging portion 21.

At this time the driving side engaging portion 23 is positioned with high precision relative to the main assembly development coupling 53 by the contact portion 11c, and therefore, there is no need of upsizing extremely the bevelled portion 23c6 and the bevelled portion 53f, so that the driving side engaging portion 23 and the main assembly development coupling 53 can be downsized.

As shown in Figure 18, by the rotation of the main assembly development coupling 53, when the phases of the projections 23c1 to 23c3 of the driving side engaging portion 23 and the holes 53a-53c of the main assembly development coupling 53 align with each other, the boss 23c4 and the hole 53e are brought into the engagement. This aligns the axis 23c5 of the driving side engaging portion 23, and the axis 53d of the main assembly development coupling 53 with each other. And, the driving side engaging portion 23 is positioned by the main assembly development coupling 53, and therefore, the engaging portion bearing member 19 is spaced from the drum-rear bearing 11. Here, the distance between the axis 1c of the photosensitive drum 1 and the driving side engaging portion 23c5 is further by d3 from the photosensitive drum 1 than d1 shown in Figure 18 (distance d4). However, the driving side engaging portion 23 is in the position nearer to the photosensitive drum 1 than the developing roller 25.

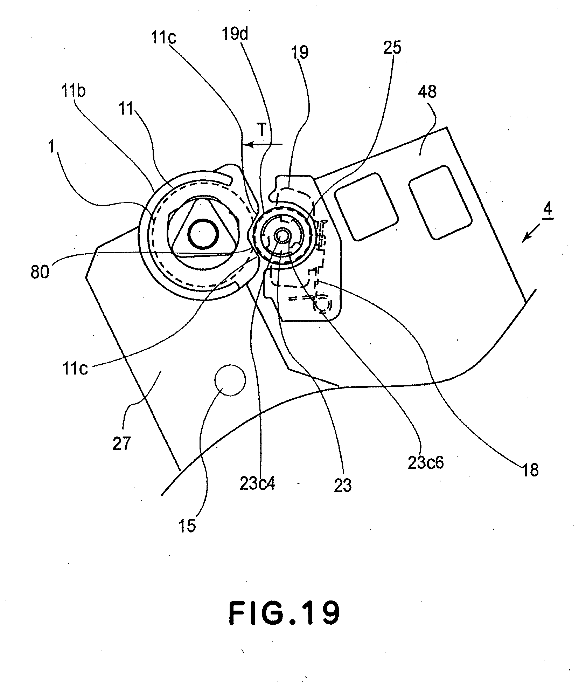

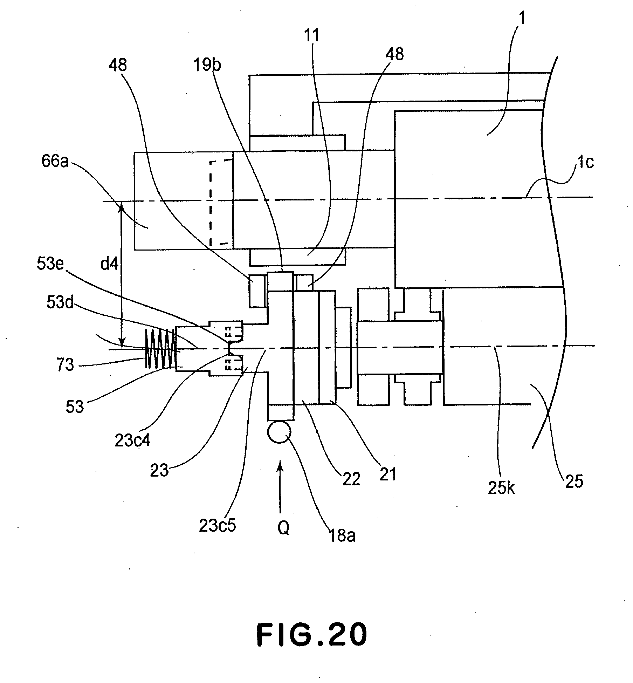

Figure 19 and Figure 20 illustrate the state where the developing unit 4 is in the contact position. The developing unit 4 of the process cartridge 7 rotates in the direction of arrow T by the operation of the spacer member 8 of the main assembly 100A of the apparatus around the axis of the rear supporting pin 15 which supports the developing-device-rear bearing 13 of the cleaning frame 27. As shown in Figure 20, then, the developing unit 4 moves to the contact position and the photosensitive drum 1 and the developing roller 25 abut to each other. Here, the driving side engaging portion 23 and the main assembly development coupling 53 are engaged with each other. Even if the developing unit 4 therefore, rotates in the direction of arrow T, the driving side engaging portion 23 of the Oldham coupling 20 maintains the engagement with the main assembly development coupling 53 of the main assembly 100A of the apparatus, and does not rotate it in the direction of an arrow T. As shown in Figure 20, in the state where the engaging portion bearing member 19 has the gap relative to the drum-rear bearing 11, the driving side engaging portion 23 and the main assembly development coupling 53 are engaged with each other. The axis 25k of the developing roller, the axis 23c5 of the driving side engaging portion 23, and the axis 53d of development couplings are substantially in alignment with each other. The distances from the respective drum axis 1c become d4.

As has been described hereinbefore, in this embodiment, the structure is such that the rotational driving force is directly inputted to the developing roller 25 through the coupling 22 from the main assembly development coupling 53 rotated independently of drum drive coupling 66 which inputs the rotational driving force to the photosensitive drum 1. Accordingly, the influence by the rotation of the developing roller 25 to the rotational accuracy of the photosensitive drum 1 can be suppressed, and furthermore, the rotational accuracy of the developing roller 25 per se is improved. For this reason, the image quality is improved.

In addition, the driving side engaging portion 23 of the Oldham coupling 20 is positioned at the constant position relative to the cartridge 7, and it is made movable in the direction crossing with the axis 25k of the developing roller 25. By this, the main assembly development coupling 53 and the driving side engaging portion 23 can be engaged with each other without using the large guide and so on (space-saving). Therefore, the process cartridge 7 and the image forming apparatus 100 can be downsized. In addition, the operativity of the mounting of the process cartridge 7 to the main assembly 100A of the apparatus improves.

In addition, also when the developing roller 25 is mounted to the apparatus main assembly in the state spaced from the photosensitive drum 1, the driving side engaging portion 23 is placed at the constant position, and therefore the operativity of the mounting, to the main assembly 100A of the apparatus, of the process cartridge 7 can be improved.

Furthermore, with respect to the output of the image, the Oldham coupling 20 is used, and therefore, the rotational driving force can be given to the developing roller 25 also where the developing unit 4 is spaced. Before the developing roller 25 for this reason, abuts to the photosensitive drum 1, it is possible that the developing roller 25 is rotated so that the toner is triboelectrically charged by the developing blade 35, thereby to give a charge amount to the toner. When sufficient charge amount cannot be given, and the toner is transferred onto the secondary transfer roller 70 (Figure 1) through the intermediary transfer unit 5 from the photosensitive drum 1, the back side of the recording material (for example, paper) is contaminated. But, this problem can be prevented by the triboelectrical charge applied before abutment of the developing roller 25 to the photosensitive drum 1.

In addition, there is a possibility that the residual toner container 71a of the intermediary transfer member cleaning 71 provided in the intermediary transfer unit 5 is filled up earlier rather than the expected lifetime (increase of the exchange frequency of the residual toner container), but this possibility is also avoidable.

Furthermore, by using the Oldham coupling 20, also when the developing unit 4 is moved to the contact position from the spaced position, the developing roller 25 can be rotated. Therefore, when the developing unit 4 is moved to the contact position from the spaced position in the state where the photosensitive drum 1 rotates, the developing roller 25 can be rotated to reduce the impact to the photosensitive drum 1.

In addition, although this embodiment has been described with the example which uses the Oldham coupling 20, other couplings (for example, lateral coupling and so on) which can absorb the rotational variation produced when the axes the input side and the output side are deviated, may be used.

### Embodiment 2

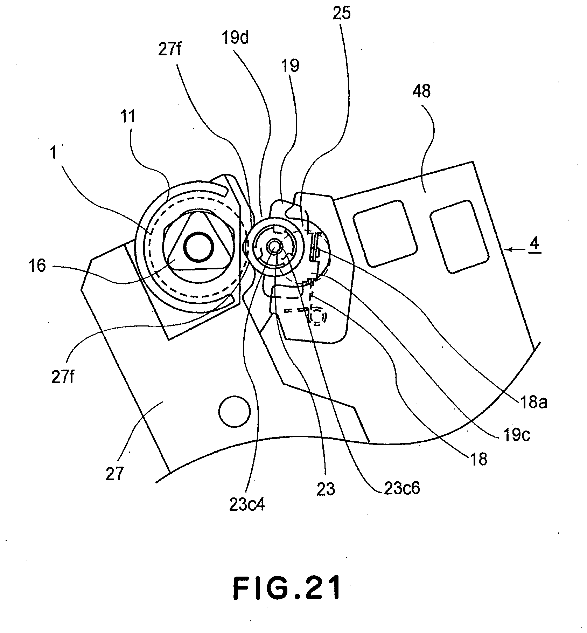

In the first embodiment, the engaging portion bearing member 19 is urged to the drum-rear bearing 11 which supports the photosensitive drum 1. As shown in Figure 21, however, a contact portion 27f which is the holding portion which can be contacted by the engaging
portion bearing member 19 may be provided in the cleaning frame 27.

Figure 21 illustrates the state where the developing unit 4 is positioned at the spaced position. As has been described with Embodiment 1, the developing unit 4 is in the spaced position by the developing device separation member 64 or the spacing guide portion 84, and therefore, as the broken lines show, the developing roller 25 and the photosensitive drum 1 are spaced from each other. However, the arm portion 18a of the urging member 18 which is the torsion coil spring provided in the side cover 48 abuts the locking portion 19c of the engaging portion bearing member 19, and therefore, the driving side engaging portion 23 is urged in the direction crossing with the direction of the axis of the developing roller 25. Therefore, the contact portion 19d of the engaging portion bearing member 19 is contacted to the contact portion 27f provided in the cleaning frame 27, by which the position of the engaging portion bearing member 19 is determined. The contact portion 27f of the cleaning frame 27 is formed by two surfaces which is in parallel with the axis of the photosensitive drum 1 and which constitutes the shape of V. The cleaning frame 27 is provided with a drum-rear bearing 11, and the drum-rear bearing 11 is provided integrally with a positioning portion 11b. Therefore, the driving side engaging portion 23 rotatably supported by the engaging portion bearing member 19 can also be positioned relative to the axis 53d of the main assembly development coupling 53 with high precision.

The other structures are the same as those of the first embodiment, and the effects similar to the effects in the first embodiment are provided.

### Embodiment 3

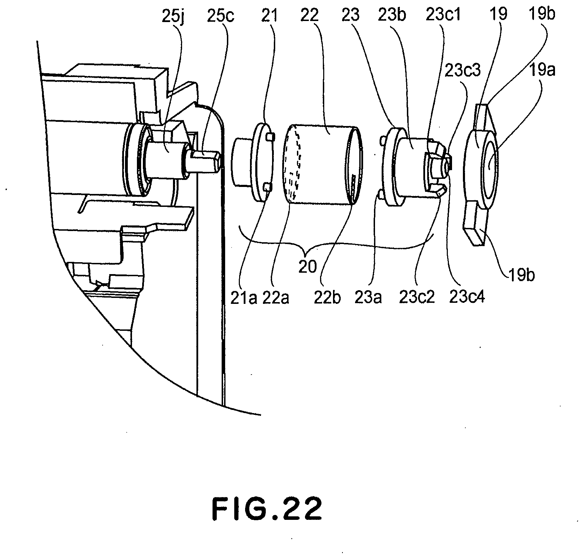

In the first embodiment, the Oldham coupling is used as the shaft coupling member. When the developing roller diameter is small, it is required for the amount of developing device separation to be large, and therefore, the spring which is the elastic portion may be used for the intermediary engaging portion 22 of the shaft coupling member 20, as shown in Figure 22.

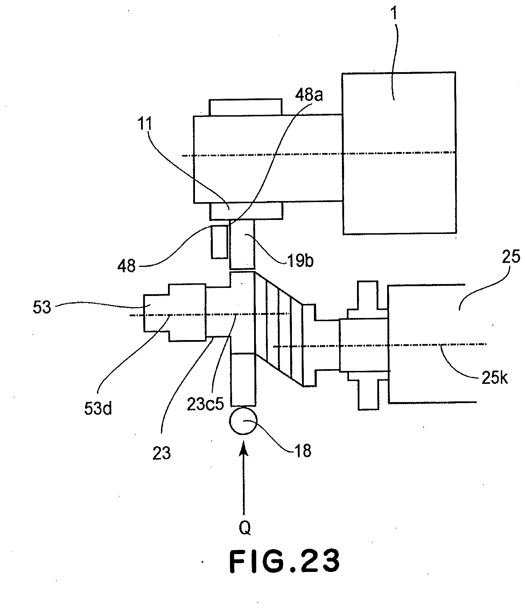

In Figure 22, the shaft coupling member 20 comprises a driven side engaging portion 21, an intermediary engaging portion 22, and a driving side engaging portion 23. The intermediary engaging portion includes a spring 22. The driven side engaging portion 21 is provided with a boss 21a for the engagement of the spring 22. Similarly, the driving side engaging portion 23 is provided with a boss 23a which engages with the spring 22. The spring 22 is provided with the arm portion 22a engaged with the driven side engaging portion boss 21a, and the arm portion 22b engaged with the driving side engaging portion boss 23a. The shaft portion 23b of the driving side engaging portion 23 is rotatably engaged with a hole 19a of the engaging portion bearing member 19. The projections 23c1 to 23c4 engaged with main assembly development coupling 53 which is the second main assembly drive transmission member of the main assembly 100A of the apparatus as will be described hereinafter is integrally formed on the driving side engaging portion 23. When the drive of the main assembly 100A of the apparatus is transmitted to the driving side engaging portion 23, similarly to Embodiment 1, the drive will be transmitted to the arm portion 22b of the spring 22 from the development side coupling boss 23a. The rotational driving force transmitted to the spring 22 is transmitted in turn to the boss 21a of the follow-engaging portion 21 from the arm portion 22a of the spring 22. As shown in Figure 23, when the outer diameter of the developing roller 25 is small, the shaft coupling member 20 of this embodiment is desirable than the Oldham coupling -- as the case may be. This is because, the amount of deviations between the axis 23c5 of the driving side engaging portion 23 and the axis 25k of the developing roller 25 may be relatively large.

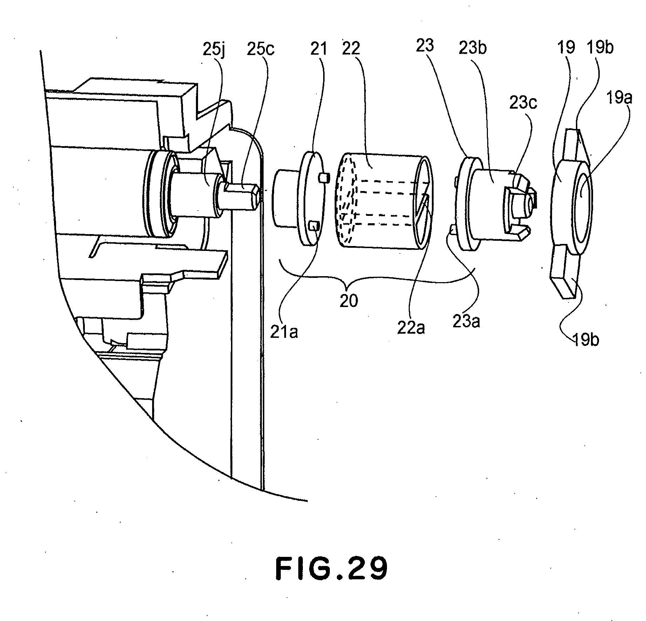

Although the spring 22 is used as the middle engaging portion in this embodiment, an elastic rubber 22 of the cylindrical-shape may be used as the elastic portion as shown in Figure 29. The inside circumference of the elastic rubber 22 is provided with a rib 22a for transmitting the driving force by the engagement with the boss 23a of the driving side engaging portion 23 and with the boss 21a of the driven side engaging portion 21.

The other structures are the same as those of the first embodiment, and the effects similar to the effects of the first embodiment are provided.

### Embodiment 4

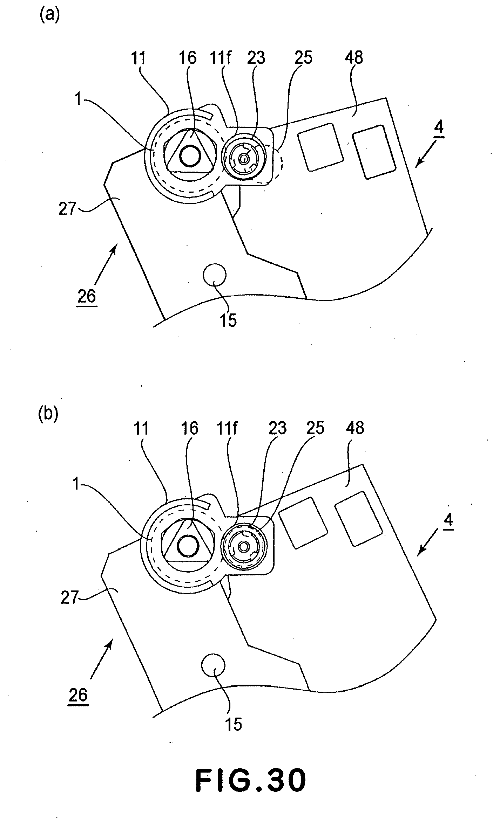

In the first embodiment, the engaging portion bearing member 19 is urged to the drum-rear bearing 11 which supports the photosensitive drum 1, by the urging spring 18. In this embodiment, the drum-rear bearing 11 is provided with a hole 11f which is the holding portion for retaining the driving side engaging portion 23, as shown in Figure 30 (a). An inner diameter of the hole 11f is large as compared with the outer diameter of the driving side engaging portion 23. More particularly, the driving side engaging portion 23 is retained for movement in the direction crossing with the axis of the developing roller 25 to the hole 11f. In Embodiment 1, the driving side engaging portion 23 is positioned with a gap relative to the axis of 53d of the main assembly development coupling 53 with respect to the
positioning direction to the drum-rear bearing 11, through the engaging portion bearing member 19, as shown in Figure 18. In this embodiment, the structure is such that the axis 23c5 of the driving side engaging portion 23 may deviate in the direction crossing with the axis of the developing roller 25 to whichever side. Even if the developing unit 4 moves to the spaced position from the contact position, the driving side engaging portion 23 is retained in the hole 11f. Therefore, also when the process cartridge 7 enters the main assembly 100A of the apparatus with the state of being positioned at the spaced position, the driving side engaging portion 23 is smoothly engaged with the main assembly development coupling 53. Figure 30 (b) illustrates the state where the driving side engaging portion 23 is positioned by the main assembly development coupling (unshown). In more detail, the driving side engaging portion 23 is positioned by the main assembly development coupling (unshown), so that it does not contact with the hole 11f.

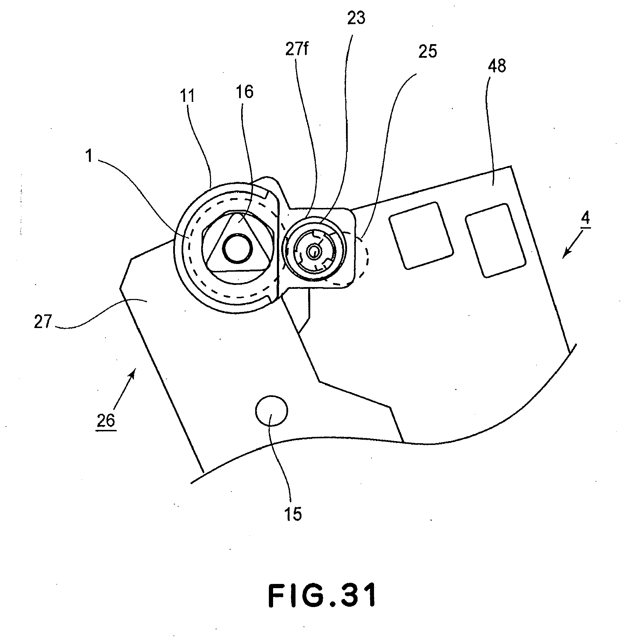

As shown in Figure 31, a hole 27f for retaining the driving side engaging portion 23 may be provided in the cleaning frame 27.

The other structures are the same as that of those of the first embodiment, and provide the effects similar to the effects of the first embodiment.

### Other Examples

In the above described embodiment, although the four process cartridges are used, this number is not inevitable but may be selected suitably, if necessary, by one-skilled-in-the-art.

In the embodiments mentioned above, although the image forming apparatus is the type of printer, the present invention is not limited to this. For example, it is applicable also to other image forming apparatuses, such as the copying machine and the facsimile device, and the image forming apparatuses, such as a composite machine thereof. In addition, although the intermediary transfer member is used in the embodiment mentioned above, the color toner images are superimposedly transferred onto the intermediary transfer member sequentially and the toner images carried by the intermediary transfer member are transferred onto the transfer material all together, the present invention is not limited to this type. For example, in an alternative structure, the recording material carrying member is used and the color toner images are superimposedly transferred onto the recording material carried by the recording material carrying member sequentially. The similar effects are provided when the present invention is applied to these types of image forming apparatuses.

As has been described hereinbefore, according to the present invention the large guide for the engagement with the engaging portion and the second main assembly drive transmission member is unnecessary. For this reason, the process cartridge and the electrophotographic image forming apparatus are downsized. Furthermore, even if the process cartridge is mounted in the state where the photosensitive drum and the developing roller are spaced from each other, the engaging portion and the second main assembly drive transmission member of the shaft coupling member engage with each other smoothly, and therefore, the mounting property is improved.

In addition, the rotational accuracy of the developing roller can be improved, and therefore, the image quality can be improved.

According to the present invention, it is possible to provide a process cartridge and a small size electrophotographic image forming apparatus wherein a rotational driving force is directly inputted to the developing roller through the shaft coupling member from the main assembly of the apparatus independently from the driving input to the photosensitive drum.

It is also possible to provide a process cartridge and an image forming apparatus wherein even after the photosensitive drum and the developing roller have spaced, when the process cartridge is mounted, the engaging portion and a second main assembly drive transmission member of a shaft coupling member engage with each other, smoothly.

It is further possible to provide a process cartridge and an image forming apparatus wherein the rotational accuracy of the developing roller is improved, so that the image quality is improved.

## Claims

1. A process cartridge (7) detachably mountable to a main assembly (100A) of an electrophotographic image forming apparatus (100), wherein the main assembly (100A) includes a rotatable first main assembly drive transmission member (66) and a rotatable second main assembly drive transmission member (53), said process cartridge (7) comprising:
an electrophotographic photosensitive drum (1);
a drum unit (26) containing said electrophotographic photosensitive drum (1);
a developing roller (25) for developing an electrostatic latent image formed on said electrophotographic photosensitive drum (1) with a developer;
a developing unit (4) containing said developing roller (25) and movably connected with said drum unit (26), said developing unit (4) being movable relative to said drum unit (26) between a contact position in which said developing roller (25) contacts said electrophotographic photosensitive drum (1) and a spaced position in which said developing roller (25) is spaced from said electrophotographic photosensitive drum (1);
a drum coupling member (16), provided on one axial end of said electrophotographic photosensitive drum (1), for engaging with the first main assembly drive transmission member (66) and transmitting a first rotational driving force to the electrophotographic photosensitive drum (1), when said process cartridge (7) is mounted to the main assembly (100A) of the apparatus along an axial direction of said electrophotographic photosensitive drum (1); and
a shaft coupling member (20), provided on one axial end of said developing roller (25), capable of transmitting a second rotational driving force with a deviation permitted between an axis (53d) of the second main assembly drive transmission member (53) and an axis (25k) of said developing roller (25) with respect to a direction (Q) crossing the axis (25k) of said developing roller (25),
wherein said shaft coupling member (20) includes an engaging portion (23) configured to engage with the second main assembly drive transmission member (53) and to receive the second rotational driving force, when said process cartridge (7) is mounted to the main assembly (100A) of the apparatus; said engaging portion being movable in the direction (Q) crossing the axis (25k) of said developing roller (25);
**characterized in that**
the drum unit (26) comprises a holding portion (11c; 11f; 27f) capable of holding said engaging portion (23) at such predetermined position relative to the process cartridge (7) that when said process cartridge (7) enters said main assembly (100A) of the apparatus with said developing unit (4) positioned in the spaced position, the engaging portion (23) is positioned engageably with the second main assembly drive transmission member (53) by the holding portion (11c; 11f; 27f) while an axis (23c5) of said engaging portion (23) is deviated from the axis (25k) of said developing roller (25) with respect to the direction (Q) crossing the axis (25k) of said developing roller (25).

2. A process cartridge according to Claim 1, wherein in a state in which said developing unit (4) is in the spaced position, a distance between an axis (1c) of said electrophotographic photosensitive drum (1) and the axis (23c5) of said engaging portion (23) is smaller than a distance between the axis (1c) of said electrophotographic photosensitive drum (1) and the axis (25k) of said developing roller (25) and wherein said developing unit (4) is effective to develop an electrostatic latent image formed on said electrophotographic photosensitive drum (1), by said developing roller (25) with said developing unit (4) being in the contact position.

3. A process cartridge according to Claim 1 or 2, wherein said holding portion (11c) is provided on a drum bearing (11) for supporting rotatably said electrophotographic photosensitive drum (1).

4. A process cartridge according to Claim 3, wherein said drum bearing (11) is provided with a cartridge positioning portion (11b) for positioning said process cartridge (7) by contacting a main assembly positioning portion (83a) provided in the main assembly (100A) of the apparatus.

5. A process cartridge according to Claim 1 or 2, wherein said holding portion (27f) is provided on a frame (27) of said drum unit (26).

6. A process cartridge according to Claim 5, wherein said frame (27) is provided with a drum bearing (11) having a cartridge positioning portion (11b) for positioning said process cartridge (7) by contacting to a main assembly positioning portion (83) provided in the main assembly (100A) of the apparatus, said drum bearing (11) being effective to support rotatably said electrophotographic photosensitive drum (1).

7. A process cartridge according to any of Claims 1 to 6, wherein said process cartridge (1) includes an urging member (18) for urging said engaging portion (23) in the direction (Q) crossing the axis of said developing roller (25).

8. A process cartridge according to any of Claims 1 to 7, wherein the holding portion is a hole (11f).

9. A process cartridge according to any of Claims 1 to 8, wherein said developing unit (4) includes an engaging portion bearing member (19) which supports rotatably said engaging portion (23) and which is movable in the direction (Q) crossing the axis (25k) of said developing roller (25) relative to said developing unit (4), and wherein said engaging portion (23) is positioned to said holding portion (11c) through said engaging portion bearing member (19).

10. A process cartridge according to any of Claims 1 to 9, wherein said developing unit (4) includes a space holding member (64) movable between an engagement position in which said space holding member (64) is engaged with said drum unit (26) to maintain said developing unit (4) in said spaced position, and a release position in which said space holding member (64) is disengaged from said drum unit (26) by contacting the main assembly (100A) of the apparatus when said process cartridge (7) is mounted to the main assembly (100A) of the apparatus along the axial direction of said electrophotographic photosensitive drum (1).

11. A process cartridge according to any of Claims 1 to 10, wherein said developing unit (4) includes a force receiving portion (31b) for receiving a force for moving said developing unit (4) from the contact position to the spaced position, when said process cartridge (7) enters the main assembly (100A) of the apparatus.

12. A process cartridge according to Claim 1, wherein said shaft coupling member (20) is an Oldham coupling.

13. A process cartridge according to Claim 1, wherein said shaft coupling member (20) includes an elastic portion for permitting a deviation between the axis (23c5) of said engaging portion (23) and the axis (25k) of said developing roller (25).

14. A process cartridge according to claim 12, wherein said Oldham coupling (12) includes a driving side engaging portion (23) as said engaging portion configured to engage with the second main assembly drive transmission member (53) when said process cartridge (1) is mounted to said main assembly (100A) of the apparatus, a driven side engaging portion (21) fixed to said developing roller (25), and an intermediary engaging portion (22) which is engaged with said driving side engaging portion (23) and with said driven side engaging portion (21) and which is movable with the engagement maintained with said driving side engaging portion (23) and with said driven side engaging portion (21) when said developing unit (4) moves between the contact position and the spaced position in a state in which the driving side engaging portion (23) is in engagement with said second main assembly drive transmission member (53).

15. A process cartridge according to Claim 14, wherein said Oldham coupling (20) is capable of transmitting the second rotational driving force to said developing roller (25) in a state in which developing unit (4) is in the contact position and in a state in which developing unit (4) is in the spaced position.

16. An electrophotographic image forming apparatus (100) for forming an image on a recording material (S), comprising:
(i) the rotatable first main assembly drive transmission member (66) and the rotatable second main assembly drive transmission member (53);
(ii) the process cartridge (7) according to any of Claims 1 to 15, mounted detachably to the main assembly (100A) of the apparatus of said electrophotographic image forming apparatus (100); and
(iii) feeding means for feeding the recording material (S).

17. An apparatus according to Claim 16, further comprising a main assembly positioning portion (83) for positioning said process cartridge (7) by engaging with a drum bearing (11) having said holding portion (11c) for supporting rotatably said electrophotographic photosensitive drum (1) and/or
wherein the second main assembly drive transmission member (53) is provided with a hole (53e) for transmitting the second rotational driving force, wherein said hole (53e) is engaged with a projection (23c4) provided on said engaging portion (23) when the second main assembly drive transmission member (53) is engaged with said engaging portion (23), and wherein the second main assembly drive transmission member (53) is urged toward said process cartridge (7) by an urging member (73) provided in said main assembly (100A) of the apparatus.

## Patentansprüche

1. Prozesskartusche (7), die abnehmbar an einer Hauptbaugruppe (100A) einer elektrofotografischen Bildausbildungsvorrichtung (100) montierbar ist, wobei die Hauptbaugruppe (100A) ein drehbares erstes Hauptbaugruppenantriebsübertragungselement (66) und ein drehbares zweites Hauptbaugruppenantriebsübertragungselement (53) hat, wobei die Prozesskartusche (7) umfasst:
eine elektrofotografische lichtempfindliche Trommel (1);
eine Trommeleinheit (26), die die elektrofotografische lichtempfindliche Trommel (1) enthält;
eine Entwicklungswalze (25) zum Entwickeln eines auf der elektrofotografischen lichtempfindlichen Trommel (1) ausgebildeten, elektrostatisch latenten Bildes mit einem Entwickler;
eine Entwicklungseinheit (4), die die Entwicklungswalze (25) enthält und beweglich mit der Trommeleinheit (26) verbunden ist, wobei die Entwicklungseinheit (4) relativ zu der Trommeleinheit (26) zwischen einer Berührungsposition, in der die Entwicklungswalze (25) die elektrofotografische lichtempfindliche Trommel (1) berührt, und einer beabstandeten Position, in der die Entwicklungswalze (25) von der elektrofotografischen lichtempfindlichen Trommel (1) beabstandet ist, beweglich ist;
ein Trommelkopplungselement (16), das an einem axialen Ende der elektrofotografischen lichtempfindlichen Trommel (1) bereitgestellt ist, um mit dem ersten Hauptbaugruppenantriebsübertragungselement (66) in Eingriff zu geraten und eine erste drehende Antriebskraft zu der elektrofotografischen lichtempfindlichen Trommel (1) zu übertragen, wenn die Prozesskartusche (7) an der Hauptbaugruppe (100A) der Vorrichtung entlang einer axialen Richtung der elektrofotografischen lichtempfindlichen Trommel (1) montiert ist; und
ein Wellenkopplungselement (20), das an einem axialen Ende der Entwicklungswalze (25) bereitgestellt ist, das in der Lage ist, eine zweite drehende Antriebskraft mit einer Abweichung zu übertragen, die zwischen einer Achse (53d) des zweiten Hauptbaugruppenantriebsübertragungselements (53) und einer Achse (25k) der Entwicklungswalze (25) mit Bezug auf eine Richtung (Q) gestattet ist, die die Achse (25k) der Entwicklungswalze (25) schneidet,
wobei das Wellenkopplungselement (20) einen Eingriffabschnitt (23) hat, der konfiguriert ist, mit dem zweiten Hauptbaugruppenantriebsübertragungselement (53) in Eingriff zu geraten und die zweite drehende Antriebskraft zu empfangen, wenn die Prozesskartusche (7) an der Hauptbaugruppe (100A) der Vorrichtung montiert ist; wobei der Eingriffabschnitt in der Richtung (Q) beweglich ist, die die Achse (25k) der Entwicklungswalze (25) schneidet;
**dadurch gekennzeichnet, dass**
die Trommeleinheit (26) einen Halteabschnitt (11c; 11f, 27f) umfasst, der in der Lage ist, den Eingriffabschnitt (23) an einer solchen vorbestimmten Position relativ zu der Prozesskartusche (7) zu halten, dass, wenn die Prozesskartusche (7) in die Hauptbaugruppe (100A) der Vorrichtung mit der Entwicklungseinheit (4) in der beabstandeten Position positioniert eindringt, der Eingriffabschnitt (23) mit dem zweiten Hauptbaugruppenantriebsübertragungselement (53) durch den Halteabschnitt (11c; 11f; 27f) in Eingriff bringbar positioniert ist, während eine Achse (23c5) des Eingriffabschnitts (23) von der Achse (25k) der Entwicklungswalze (25) mit Bezug auf die Richtung (Q) abweicht, die die Achse (25k) der Entwicklungswalze (25) schneidet.

2. Prozesskartusche nach Anspruch 1, wobei in einem Zustand, in dem die Entwicklungseinheit (4) sich in der beabstandeten Position befindet, ein Abstand zwischen einer Achse (1c) der elektrofotografischen lichtempfindlichen Trommel (1) und der Achse (23c5) des Eingriffabschnitts (23) kleiner als ein Abstand zwischen der Achse (1c) der elektrofotografischen lichtempfindlichen Trommel (1) und der Achse (25k) der Entwicklungswalze (25) ist, und wobei die Entwicklungseinheit (4) wirkungsvoll ist, ein auf der elektrofotografisch lichtempfindlichen Trommel (1) ausgebildetes elektrostatisch latentes Bild durch die Entwicklungswalze (25) mit der sich in der Berührungsposition befindenden Entwicklungseinheit (4) zu entwickeln.

3. Prozesskartusche nach Anspruch 1 oder 2, wobei der Halteabschnitt (11c) auf einem Trommellager (11) zum drehbar Lagern der elektrofotografischen lichtempfindlichen Trommel (1) bereitgestellt ist.

4. Prozesskartusche nach Anspruch 3, wobei das Trommellager (11) mit einem Kartuschenpositionierungsabschnitt (11b) zum Positionieren der Prozesskartusche (7) durch Berühren eines in der Hauptbaugruppe (100A) der Vorrichtung bereitgestellten Hauptbaugruppenpositionierungsabschnitts (83a) bereitgestellt ist.

5. Prozesskartusche nach Anspruch 1 oder 2, wobei der Halteabschnitt (27f) auf einem Rahmen (27) der Trommeleinheit (26) bereitgestellt ist.

6. Prozesskartusche nach Anspruch 5, wobei der Rahmen (27) mit einem Trommellager (11) bereitgestellt ist, das einen Kartuschenpositionierungsabschnitt (11b) zum Positionieren der Prozesskartusche (7) durch Berühren eines in der Hauptbaugruppe (100A) der Vorrichtung bereitgestellten Hauptbaugruppenpositionierungsabschnitts (83) zu positionieren, wobei das Trommellager (11) wirkt, die elektrofotografische lichtempfindliche Trommel (1) drehbar zu lagern.

7. Prozesskartusche nach einem der Ansprüche 1 bis 6, wobei die Prozesskartusche (1) ein drängendes Element (18) hat, um den Eingriffabschnitt (23) in die Richtung (Q) zu drängen, die die Achse der Entwicklungswalze (25) schneidet.

8. Prozesskartusche nach einem der Ansprüche 1 bis 7, wobei der Halteabschnitt eine Bohrung (11f) ist.

9. Prozesskartusche nach einem der Ansprüche 1 bis 8, wobei die Entwicklungseinheit (4) ein Eingriffabschnittlagerelement (19) hat, das den Eingriffabschnitt (23) drehbar lagert und das in die Richtung (Q) beweglich ist, die die Achse (25k) der Entwicklungswalze (25) relativ zu der Entwicklungseinheit (4) schneidet, und wobei der Eingriffabschnitt (23) durch das Eingriffabschnittlagerelement (19) an dem Halteabschnitt (11c) positioniert ist.

10. Prozesskartusche nach einem der Ansprüche 1 bis 9, wobei die Entwicklungseinheit (4) ein Abstandhalteelement (64) hat, das zwischen einer eingerückten Position, in der das Abstandhalteelement (64) mit der Trommeleinheit (26) in Eingriff ist, um die Entwicklungseinheit (4) in der beabstandeten Position beizubehalten, und einer Freigabeposition, in der das Abstandhalteelement (64) von der Trommeleinheit (26) außer Eingriff gebracht ist, beweglich ist, in dem es die Hauptbaugruppe (100A) der Vorrichtung berührt, wenn die Prozesskartusche (7) an der Hauptgruppe (100A) der Vorrichtung entlang der axialen Richtung der elektrofotografischen lichtempfindlichen Trommel (1) montiert ist.

11. Prozesskartusche nach einem der Ansprüche 1 bis 10, wobei die Entwicklungseinheit (4) einen Kraftempfangsabschnitt (31b) hat, um eine Kraft zum Bewegen der Entwicklungseinheit (4) an der Berührungsposition zu der beabstandeten Position zu empfangen, wenn die Prozesskartusche (7) in die Hauptbaugruppe (100A) der Vorrichtung eindringt.

12. Prozesskartusche nach Anspruch 1, wobei das Wellenkopplungselement (20) eine Oldham-Kupplung ist.

13. Prozesskartusche nach Anspruch 1, wobei das Wellenkopplungselement (20) einen elastischen Abschnitt hat, um eine Abweichung zwischen der Achse (23c5) des Eingriffabschnitts (23) und der Achse (25k) der Entwicklungswalze (25) zu ermöglichen.

14. Prozesskartusche nach Anspruch 12, wobei die Oldham-Kupplung (12) einen antriebsseitigen Eingriffabschnitt (23) als den Eingriffabschnitt hat, der konfiguriert ist, mit dem zweiten Hauptbaugruppenantriebsübertragungselement (53) in Eingriff zu geraten, wenn die Prozesskartusche (1) an der Hauptbaugruppe (100A) der Vorrichtung montiert ist, einen Eingriffabschnitt (21) der angetriebenen Seite hat, der an der Entwicklungswalze (25) befestigt ist, und einen Zwischeneingriffabschnitt (22) hat, der mit dem antriebsseitigen Eingriffabschnitt (23) und mit dem Eingriffabschnitt (21) an der angetriebenen Seite in Eingriff ist, und der mit dem Eingriff mit dem antriebsseitigen Eingriffabschnitt (23) und dem Eingriffabschnitt (21) an der angetriebenen Seite beibehalten beweglich ist, wenn die Entwicklungseinheit (4) sich zwischen der Berührungsposition und der beabstandeten Position in einem Zustand bewegt, in dem der antriebsseitige Eingriffabschnitt (23) mit dem zweiten Hauptbaugruppenantriebsübertragungselement (53) in Eingriff ist.

15. Prozesskartusche nach Anspruch 14, wobei die Oldham-Kupplung (20) in der Lage ist, die zweite drehende Antriebskraft in einem Zustand zu der Entwicklungswalze (25) zu übertragen, in dem die Entwicklungseinheit (4) sich in der Berührungsposition befindet, und in einem Zustand, in dem die Entwicklungseinheit (4) sich in der beabstandeten Position befindet.

16. Elektrofotografische Bildausbildungsvorrichtung (100) zum Ausbilden eines Bildes auf einem Aufzeichnungsmaterial (S), mit:
(i) dem drehbaren ersten Hauptbaugruppenantriebsübertragungselement (66) und dem drehbaren zweiten Hauptbaugruppenantriebsübertragungselement (53);
(ii) der Prozesskartusche (7) nach einem der Ansprüche 1 bis 15, die abnehmbar an der Hauptbaugruppe (100A) der Vorrichtung der elektrofotografischen Bildausbildungsvorrichtung (100) montiert ist; und
(iii) einem Zufuhrmittel zum Zuführen des Aufzeichnungsmaterials (S).

17. Vorrichtung nach Anspruch 16, außerdem mit einem Hauptbaugruppenpositionierungsabschnitt (83) zum Positionieren der Prozesskartusche (7) durch in Eingriff Geraten mit einem Trommellager (11), das den Halteabschnitt (11c) aufweist, um die elektrofotografische lichtempfindliche Trommel (1) drehbar zu lagern, und/oder
wobei das zweite Hauptbaugruppenantriebsübertragungselement (53) mit einer Bohrung (53e) bereitgestellt ist, um die zweite Drehantriebskraft zu übertragen, wobei die Bohrung (53e) mit einem Vorsprung (23c4) in Eingriff ist, der auf dem Eingriffabschnitt (23) bereitgestellt ist, wenn das zweite Hauptbaugruppenantriebsübertragungselement (53) mit dem Eingriffabschnitt (23) in Eingriff ist, und
wobei das zweite Hauptbaugruppenantriebsübertragungselement (53) durch ein drängendes Element (73), das in der Hauptbaugruppe (100A) der Vorrichtung bereitgestellt ist, zu der Prozesskartusche (7) gedrängt ist.

## Revendications

1. Cartouche de traitement (7) pouvant être montée de manière amovible sur un ensemble principal (100A) d'un appareil de formation d'image électrophotographique (100), l'ensemble principal (100A) comprenant un premier organe rotatif de transmission d'entraînement d'ensemble principal (66) et un second organe rotatif de transmission d'entraînement d'ensemble principal (53), ladite cartouche de traitement (7) comprenant :
un tambour photosensible électrophotographique (1) ;
une unité tambour (26) contenant ledit tambour photosensible électrophotographique (1) ;
un rouleau de développement (25) pour développer une image latente électrostatique formée sur ledit tambour photosensible électrophotographique (1) au moyen d'un développateur ;
une unité de développement (4) contenant ledit rouleau de développement (25) et reliée amovible à ladite unité tambour (26), ladite unité de développement (4) étant mobile relativement à ladite unité tambour (26) entre une position de contact dans laquelle ledit rouleau de développement (25) entre en contact avec ledit tambour photosensible électrophotographique (1), et une position espacée dans laquelle ledit rouleau de développement (25) est espacé dudit tambour photosensible électrophotographique (1) ;
un organe d'accouplement de tambour (16), situé sur une extrémité axiale dudit tambour photosensible électrophotographique (1), pour engagement avec le premier organe de transmission d'entraînement d'ensemble principal (66) et transmission d'une première force d'entraînement en rotation au tambour photosensible électrophotographique (1), lorsque ladite cartouche de traitement (7) est montée sur l'ensemble principal (100A) de l'appareil le long d'une direction axiale dudit tambour photosensible électrophotographique (1) ; et
un organe d'accouplement d'arbre (20), situé sur une extrémité axiale dudit rouleau de développement (25), apte à transmettre une seconde force d'entraînement en rotation avec une déviation permise entre un axe (53d) du second organe de transmission d'entraînement d'ensemble principal (53) et un axe (25k) dudit rouleau de développement (25) par rapport à une direction (Q) transversale à l'axe (25k) dudit rouleau de développement (25),
ledit organe d'accouplement d'arbre (20) comprenant une partie d'engagement (23) configurée pour engagement avec le second organe de transmission d'entraînement d'ensemble principal (53) et réception de la seconde force d'entraînement en rotation, lorsque ladite cartouche de traitement (7) est montée sur l'ensemble principal (100A) de l'appareil ; ladite partie d'engagement étant mobile dans la direction (Q) transversale à l'axe (25k) dudit rouleau de développement (25) ;
**caractérisée en ce que** :
l'unité tambour (26) comprend une partie de retenue (11c ; 11f ; 27f) apte à retenir ladite partie d'engagement (23) à une position prédéterminée relativement à la cartouche de traitement (7) telle que lorsque ladite cartouche de traitement (7) pénètre dans ledit ensemble principal (100A) de l'appareil avec ladite unité de développement (4) positionnée dans la position espacée, la partie d'engagement (23) est positionnée de manière à être engagée avec le second organe de transmission d'entraînement d'ensemble principal (53) par la partie de retenue (11c ; 11f ; 27f) tandis qu'un axe (23c5) de ladite partie d'engagement (23) est dévié de l'axe (25k) dudit rouleau de développement (25) par rapport à la direction (Q) transversale à l'axe (25k) dudit rouleau de développement (25).

2. Cartouche de traitement selon la revendication 1, dans laquelle, dans un état où ladite unité de développement (4) est dans la position espacée, une distance entre un axe (1c) dudit tambour photosensible électrophotographique (1) et l'axe (23c5) de ladite partie d'engagement (23) est inférieure à une distance entre l'axe (1c) dudit tambour photosensible électrophotographique (1) et l'axe (25k) dudit rouleau de développement (25) et dans laquelle ladite unité de développement (4) sert à développer une image latente électrostatique formée sur ledit tambour photosensible électrophotographique (1), par ledit rouleau de développement (25) avec ladite unité de développement (4) étant dans la position de contact.

3. Cartouche de traitement selon la revendication 1 ou 2, dans laquelle ladite partie de retenue (11c) est située sur un palier de tambour (11) pour supporter en rotation ledit tambour photosensible électrophotographique (1) .

4. Cartouche de traitement selon la revendication 3, dans laquelle ledit palier de tambour (11) est pourvu d'une partie de positionnement de cartouche (11b) pour positionner ladite cartouche de traitement (7) par mise en contact avec une partie de positionnement d'ensemble principal (83a) située dans l'ensemble principal (100A) de l'appareil.

5. Cartouche de traitement selon la revendication 1 ou 2, dans laquelle ladite partie de retenue (27f) est située sur un châssis (27) de ladite unité tambour (26).

6. Cartouche de traitement selon la revendication 5, dans laquelle ledit châssis (27) est pourvu d'un palier de tambour (11) comportant une partie de positionnement de cartouche (11b) pour positionner ladite cartouche de traitement (7) par mise en contact avec une partie de positionnement d'ensemble principal (83) située dans l'ensemble principal (100A) de l'appareil, ledit palier de tambour (11) servant à supporter en rotation ledit tambour photosensible électrophotographique (1).

7. Cartouche de traitement selon l'une quelconque des revendications 1 à 6, ladite cartouche de traitement (1) comprenant un organe de sollicitation (18) pour solliciter ladite partie d'engagement (23) dans la direction (Q) transversale à l'axe dudit rouleau de développement (25) ;

8. Cartouche de traitement selon l'une quelconque des revendications 1 à 7, dans laquelle la partie de retenue est un trou (11f).

9. Cartouche de traitement selon l'une quelconque des revendications 1 à 8, dans laquelle ladite unité de développement (4) comprend un organe porteur de partie d'engagement (19) qui supporte en rotation ladite partie d'engagement (23) et qui est mobile dans la direction (Q) transversale à l'axe (25k) dudit rouleau de développement (25) relativement à ladite unité de développement (4), et dans laquelle ladite partie d'engagement (23) est positionnée relativement à ladite partie de retenue (11c) par le biais dudit organe porteur de partie d'engagement (19).

10. Cartouche de traitement selon l'une quelconque des revendications 1 à 9, dans laquelle ladite unité de développement (4) comprend un organe de maintien d'espace (64) mobile entre une position d'engagement dans laquelle ledit organe de maintien d'espace (64) est engagé avec ladite unité tambour (26) pour maintenir ladite unité de développement (4) dans ladite position espacée, et une position de dégagement dans laquelle ledit organe de maintien d'espace (64) est dégagé de ladite unité tambour (26) par mise en contact de l'ensemble principal (100A) de l'appareil lorsque ladite cartouche de traitement (7) est montée sur l'ensemble principal (100A) de l'appareil le long de la direction axiale dudit tambour photosensible électrophotographique (1).

11. Cartouche de traitement selon l'une quelconque des revendications 1 à 10, dans laquelle ladite unité de développement (4) comprend une partie de réception de force (31b) pour recevoir une force pour déplacer ladite unité de développement (4) de la position de contact à la position espacée, lorsque ladite cartouche de traitement (7) pénètre dans l'ensemble principal (100A) de l'appareil.

12. Cartouche de traitement selon la revendication 1, dans laquelle ledit organe d'accouplement d'arbre (20) est un accouplement Oldham.

13. Cartouche de traitement selon la revendication 1, dans laquelle ledit organe d'accouplement d'arbre (20) comprend une partie élastique pour permettre une déviation entre l'axe (23c5) de ladite partie d'engagement (23) et l'axe (25k) dudit rouleau de développement (25).

14. Cartouche de traitement selon la revendication 12, dans laquelle ledit accouplement Oldham (12) comprend une partie d'engagement côté entraînement (23) en tant que partie d'engagement configurée pour engagement avec le second organe de transmission d'entraînement d'ensemble principal (53) lorsque ladite cartouche de traitement (1) est montée sur ledit ensemble principal (100A) de l'appareil, une partie d'engagement côté entraîné (21) fixée audit rouleau de développement (25), et une partie d'engagement intermédiaire (22) qui est engagée avec ladite partie d'engagement côté entraînement (23) et avec ladite partie d'engagement côté entraîné (21) et qui est mobile avec l'engagement maintenu avec ladite partie d'engagement côté entraînement (23) et avec ladite partie d'engagement côté entraîné (21) lorsque ladite unité de développement (4) se déplace entre la position de contact et la position espacée dans un état dans lequel la partie d'engagement côté entraînement (23) est en engagement avec ledit second organe de transmission d'entraînement d'ensemble principal (53) .

15. Cartouche de traitement selon la revendication 14, dans laquelle ledit accouplement Oldham (20) est apte à transmettre la seconde force d'entraînement en rotation audit rouleau de développement (25) dans un état où l'unité de développement (4) est dans la position de contact et dans un état où l'unité de développement (4) est dans la position espacée.

16. Appareil de formation d'image électrophotographique (100) pour former une image sur un matériau d'enregistrement (S), comprenant :
(i) le premier organe rotatif de transmission d'entraînement d'ensemble principal (66) et le second organe rotatif de transmission d'entraînement d'ensemble principal (53) ;
(ii) la cartouche de traitement (7) selon l'une quelconque des revendications 1 à 15, montée de manière amovible sur l'ensemble principal (100A) de l'appareil dudit appareil de formation d'image électrophotographique (100) ; et
(iii) un moyen d'alimentation pour l'alimentation en matériau d'enregistrement (S).

17. Appareil selon la revendication 16, comprenant, en outre, une partie de positionnement d'ensemble principal (83) pour positionner ladite cartouche de traitement (7) par engagement avec un palier de tambour (11) comportant ladite partie de retenue (11c) pour supporter en rotation ledit tambour photosensible électrophotographique (1) et/ou
le second organe de transmission d'entraînement d'ensemble principal (53) étant pourvu d'un trou (53e) pour transmettre la seconde force d'entraînement en rotation, ledit trou (53e) étant engagé avec une saillie (23c4) située sur ladite partie d'engagement (23) lorsque le second organe de transmission d'entraînement d'ensemble principal (53) est engagé avec ladite partie d'engagement (23), et le second organe de transmission d'entraînement d'ensemble principal (53) étant sollicité vers ladite cartouche de traitement (7) par un organe de sollicitation (73) situé dans ledit ensemble principal (100A) de l'appareil.
